(19) Europäisches Patentamt / European Patent Office / Office européen des brevets

(11) **EP 4 697 278 A1**

(12) **EUROPEAN PATENT APPLICATION**
published in accordance with Art. 153(4) EPC

(43) Date of publication:
**18.02.2026 Bulletin 2026/08**

(21) Application number: **24844208.9**

(22) Date of filing: **20.02.2024**

(51) International Patent Classification (IPC):
**G06T 15/02** (2011.01)   **G06T 15/06** (2011.01)

(52) Cooperative Patent Classification (CPC):
**G06T 15/02; G06T 15/06**

(86) International application number:
**PCT/CN2024/077746**

(87) International publication number:
**WO 2025/020509 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 CN 202310942831**

(71) Applicant: **Huawei Technologies Co., Ltd.**
**Shenzhen, Guangdong 518129 (CN)**

(72) Inventors:
• **ZONG, Hongming**
**Shenzhen, Guangdong 518129 (CN)**

• **LAN, Wanjun**
**Shenzhen, Guangdong 518129 (CN)**
• **LIAO, Jingtang**
**Shenzhen, Guangdong 518129 (CN)**
• **XU, Yangpo**
**Shenzhen, Guangdong 518129 (CN)**
• **MO, Yunneng**
**Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

(54) **IMAGE RENDERING METHOD AND TERMINAL-CLOUD COLLABORATION SYSTEM**

(57)   Embodiments of this application provide an image rendering method and a terminal-cloud collaboration system, and relate to the field of image processing technologies. The method includes: A client end may control a service end to perform a computing processing process of a corresponding visual feature based on a computing processing requirement of the visual feature related to ray tracing of the client end, so that the client end can obtain, from the service end, an intermediate rendering result of a visual feature that needs to be rendered, rendering effect of a visual feature in a rendered image of the client end is updated in real time in a terminal-cloud collaboration manner, to improve image rendering quality of the client end.

FIG. 2

EP 4 697 278 A1

## Description

This application claims priority to Chinese Patent Application No. 202310942831.X, filed with the China National Intellectual Property Administration on July 27, 2023 and entitled "IMAGE RENDERING METHOD AND TERMINAL-CLOUD COLLABORATION SYSTEM", which is incorporated herein by reference in its entirety.

## TECHNICAL FIELD

Embodiments of this application relate to the field of image processing technologies, and in particular, to an image rendering method and a terminal-cloud collaboration system.

## BACKGROUND

In three-dimensional (3D) computer graphics, ray tracing (Ray Tracing, RT) is a rendering technology. Ray tracing simulates propagation of light rays in a 3D scene and interaction between the simulated light rays and the 3D scene, to generate a high-quality and realistic picture. Common visual effect of ray tracing computation includes direct illumination (Direct Light), indirect illumination (for example, diffuse reflection), specular reflection, glossy reflection, shadow, scattering, caustic, and the like. An image rendered by using the ray tracing technology can produce a high visual reality, and can significantly enhance picture quality, thereby improving user experience.

However, computing of the ray tracing technology needs to consume high computing power, because a computing capability and a memory capacity on a mobile terminal (for example, a mobile phone or a tablet computer) side are limited, it is difficult to obtain, through real-time rendering, a picture with visual effect of ray tracing.

## SUMMARY

To resolve the foregoing technical problem, this application provides an image rendering method and a terminal-cloud collaboration system. In the method, a client end may control a service end to perform a computing processing process of a corresponding visual feature based on a computing processing requirement of the visual feature related to ray tracing of the client end, so that the client end can obtain, from the service end, an intermediate rendering result of a visual feature that needs to be rendered, rendering effect of a visual feature in a rendered image of the client end is updated in real time in a terminal-cloud collaboration manner, to improve image rendering quality of the client end.

In a possible implementation, this application provides a terminal-cloud collaboration system. The terminal-cloud collaboration system includes at least one client end and a service end that are communicatively connected, and the at least one client end includes a first client end. The first client end is configured to send first control information of a first image to the service end. The service end is configured to: separately control computing processing processes of m visual features based on the first control information, to obtain m first intermediate rendering results that are of the first image and that are related to the m visual features, where $m \geq 2$; and send the m first intermediate rendering results to the first client end. The first client end is further configured to: receive the m first intermediate rendering results, and obtain a first rendering result of the first image based on the m first intermediate rendering results.

The visual feature may include but is not limited to direct illumination, reflected illumination, and shadow.

The client end may be deployed on a mobile terminal, and the service end may be deployed on a cloud (for example, a server).

The first control information or the following second control information is respective control information of a plurality of visual features related to ray tracing.

Because computation of a visual feature requires high computing power, in this application, a service end deployed on the cloud performs computing of an intermediate rendering result of each visual feature, to deploy a computing process that requires high computing power on the cloud for implementation. In addition, the client end deployed on the mobile terminal performs a subsequent processing process of an intermediate rendering result of each visual feature to complete rendering of a corresponding visual feature, to deploy a processing process in which a feature requires low computing power on the mobile terminal for implementation. In this way, terminal-cloud separation may be performed on a computing processing process of a feature, to offload a high- load visual feature computing process from a terminal side to a cloud side. When the computing power on the terminal side is low, various light features in image pictures can be updated in real time through collaboration with the cloud side.

To implement rendering of a visual feature in a terminal-cloud collaboration manner, the client end synchronizes control information of each visual feature to the service end, so that a computing processing requirement of the client end for each feature is synchronized to the service end. The service end may support computing processing of a plurality of features, so that a computing processing process of a corresponding visual feature may be separately controlled based on control information synchronized by the client end, to obtain an intermediate rendering result (for example, a rich illumination map of a direct illumination feature) of the corresponding visual feature. In this way, the service end may select, based on a requirement of the client end for a visual feature, a feature that needs to be rendered and a computation processing process of a control feature, so that the intermediate rendering result obtained by the service end through computing processing can meet a feature rendering requirement of the client end. Although the service end performs high-computing-power computing on the feature, the client end may control a feature computing processing process of the service end. In addition, the client end may render a corresponding visual feature based on an intermediate rendering result that is delivered by the service end and that meets a visual feature requirement of the client end, to obtain a rendered image having the corresponding visual feature. In this way, the client end only needs to perform simple computation on the received intermediate rendering result, to implement image rendering with high-order effect, thereby improving drawing quality of the image.

In a possible implementation, a quantity q of visual features supported by the service end for computing processing is greater than or equal to m, and the m visual features are visual features for which the first control information indicates to start rendering.

A quantity of visual features supported by the service end for computing processing is greater than or equal to a quantity of visual features for which any client end requests to start rendering, so that the service end supports rendering of a plurality of features.

In a possible implementation, the service end is configured with q computing processing modules that respectively perform computing processing on q visual features, where q≥m. When the service end separately controls the computing processing processes of the m visual features based on the first control information, the service end is specifically configured to invoke m computing processing modules that are in the q computing processing modules and that correspond to the m visual features to separately perform computing processing on the m visual features based on the first control information, to obtain the m first intermediate rendering results that are of the first image and that are related to the m visual features.

The service end supports a functional module (also represented as a rendering assembly or a computing processing module) of a plurality of features. The functional module may be invoked to implement computing processing of a corresponding feature based on control information of the client end.

In a possible implementation, the at least one client end further includes a second client end. The second client end is configured to send second control information of a second image to the service end. The service end is further configured to: separately control computing processing processes of n visual features based on the second control information, to obtain n second intermediate rendering results that are of the second image and that are related to the n visual features, where q≥n≥1, and the n visual features are visual features for which the second control information indicates to start rendering; and send the n second intermediate rendering results to the second client end. The second client end is further configured to: receive the n second intermediate rendering results, and obtain a second rendering result of the second image based on the n second intermediate rendering results.

The service end may support a plurality of client ends and request to perform feature computation processing on an image, and a sum of types of features requested by the plurality of client ends for computation is less than or equal to q visual features supported by the service end for computing processing.

The service end may perform, based on control information of each client end, computing processing on a visual feature for which the client end requests to start rendering, and separately perform, based on the control information of the client end, computing processing control on a visual feature required by the client end.

In a possible implementation, when the service end separately controls the computing processing processes of the n visual features based on the second control information, to obtain the n second intermediate rendering results that are of the second image and that are related to the n visual features, the service end is specifically configured to: invoke n computing processing modules that are in the q computing processing modules and that correspond to the n visual features to separately perform computing processing on the n visual features based on the second control information, to obtain the n second intermediate rendering results that are of the second image and that are related to the n visual features.

The service end supports a functional module (also represented as a rendering assembly or a computing processing module) of a plurality of features. A corresponding functional module may be selected and invoked based on a feature requested by the client end for rendering, and the corresponding functional module is used based on control information of the client end to implement computing processing of the corresponding feature, to obtain an intermediate rendering result of a corresponding feature that meets a requirement of the client end.

In a possible implementation, when the service end separately controls computing processing processes of the m visual features based on the first control information, to obtain the m first intermediate rendering results that are of the first image and that are related to the m visual features, the service end is specifically configured to: determine m original intermediate results obtained by separately computing the m visual features; and separately process the m original intermediate results based on the first control information, to obtain the m first intermediate rendering results that are of the first image and that are of the m visual features, where a data amount of the m first intermediate rendering results is less than a data amount of the m original intermediate results.

"Computing a visual feature" in the implementations of this application indicates that, when the visual feature is direct illumination, it indicates that the direct illumination is computed; or when the visual feature is shadow, it indicates that the shadow is computed.

An original intermediate result obtained by computing a visual feature is represented, and a corresponding visual feature is computed for an entire scene. For example, if the visual feature is direct illumination, the original intermediate result obtained by computing the direct illumination is an intermediate rendering result obtained by lighting the entire game scene.

In this application, control of a computing processing process of the visual feature may include control of the computing process of the visual feature, and control of extraction and/or encoding of an original intermediate result obtained through computation (a data amount may be reduced), to reduce bandwidth pressure for transmitting an intermediate rendering result.

In a possible implementation, the first control information includes first indication information indicating extraction strategies of the respective intermediate rendering results of the m visual features; and when the service end separately processes the m original intermediate results based on the first control information, to obtain the m first intermediate rendering results that are of the first image and that are of the m visual features, the service end is specifically configured to: separately extract m groups of partial intermediate results from the m original intermediate results based on the first indication information, to obtain the m first intermediate rendering results of the m visual features.

The first indication information may be a resolution requirement for the intermediate rendering result, a field of view of the client end, and/or the like. This is not limited herein.

The service end may extract and process the original intermediate result based on control information (for example, a requirement on a field of view and resolution of the intermediate rendering result) of the client end, to obtain an intermediate rendering result that meets a corresponding visual feature required by the client end.

In this way, regardless of whether there are one or more client ends, the service end may obtain an original intermediate result of a feature that needs to be rendered, and then the service end performs specific extraction processing on the original intermediate result based on control information of the client end (which is understood as a requirement of the client end for a feature resource), to obtain an intermediate rendering result of a corresponding feature that meets a requirement of a field of view of the client end. This can reduce a bandwidth requirement on a mobile terminal on a client end side.

In a possible implementation, the first control information includes third indication information indicating encoding strategies of the respective intermediate rendering results of the m visual features; and when the service end separately processes the m original intermediate results based on the first control information, to obtain the m first intermediate rendering results that are of the first image and that are of the m visual features, the service end is specifically configured to: separately encode, based on the third indication information, the m original intermediate results or the m groups of partial intermediate results extracted from the m original intermediate results, to obtain the m first intermediate rendering results of the m visual features.

The third indication information may be a compression rate, an encoding mode, or the like. This is not limited herein.

In this way, regardless of whether there are one or more client ends, the service end may obtain an original intermediate result of a feature that needs to be rendered, and then the service end performs specific extraction processing and/or encoding processing on the original intermediate result based on control information of the client end (which is understood as a requirement of the client end for a feature resource), to obtain a bitstream of the intermediate rendering result of the corresponding feature that meets a requirement of a field of view of the client end. This can reduce a bandwidth requirement on the mobile terminal on a client end side.

In a possible implementation, when the service end separately controls the computing processing processes of the n visual features based on the second control information, to obtain the n second intermediate rendering results that are of the second image and that are related to the n visual features, the service end is specifically configured to: determine n original intermediate results obtained by separately computing the n visual features; and separately process the n original intermediate results based on the second control information, to obtain the n second intermediate rendering results that are of the second image and that are of the n visual features, where a data amount of the n second intermediate rendering results is less than a data amount of the n original intermediate results.

In this application, control of a computing processing process of the visual feature may include control of the computing process of the visual feature, and control of extraction and/or encoding of an original intermediate result obtained through computation (a data amount may be reduced), to reduce bandwidth pressure for transmitting an intermediate rendering result.

In a possible implementation, the second control information includes second indication information indicating extraction strategies of the respective intermediate rendering results of the n visual features; and when the service end separately processes the n original intermediate results based on the second control information, to obtain the n second intermediate rendering results that are of the second image and that are of the n visual features, the service end is specifically configured to: separately extract n groups of partial intermediate results from the n original intermediate results based on the second indication information, to obtain the n second intermediate rendering results of the n visual features.

The second indication information may be a resolution requirement for the intermediate rendering result, a field of view of the second client end, and/or the like. This is not limited herein.

In addition, the original intermediate result is, for example, a computation result of a corresponding visual feature of a 360-degree full field of view in a three-dimensional scene (also applicable to a two-dimensional scene).

Then, the service end may extract and process the original intermediate result based on control information (for example, a requirement on a field of view and resolution of the intermediate rendering result) of the client end, to obtain an intermediate rendering result that meets a corresponding visual feature required by the client end.

In this way, regardless of whether there are one or more client ends, the service end may obtain an original intermediate result of a feature that needs to be rendered, and then the service end performs specific extraction processing on the original intermediate result based on control information of the client end (which is understood as a requirement of the client end for a feature resource), to obtain an intermediate rendering result of a corresponding feature that meets a requirement of a field of view of the client end. This can reduce a bandwidth requirement on a mobile terminal on a client end side.

In a possible implementation, the second control information includes fourth indication information indicating encoding strategies of the respective intermediate rendering results of the n visual features; and when the service end separately processes the n original intermediate results based on the second control information, to obtain the n second intermediate rendering results that are of the second image and that are of the n visual features, the service end is specifically configured to: separately encode, based on the fourth indication information, the n original intermediate results or the n groups of partial intermediate results extracted from the n original intermediate results, to obtain the n second intermediate rendering results of the n visual features.

The third indication information may be a compression rate, an encoding mode, or the like. This is not limited herein.

In this way, regardless of whether there are one or more client ends, the service end may obtain an original intermediate result of a feature that needs to be rendered, and then the service end performs specific extraction processing and/or encoding processing on the original intermediate result based on control information of the client end (which is understood as a requirement of the client end for a feature resource), to obtain a bitstream of the intermediate rendering result of the corresponding feature that meets a requirement of a field of view of the client end. This can reduce a bandwidth requirement on the mobile terminal on a client end side.

In a possible implementation, when the service end determines the m original intermediate results obtained by separately computing the m visual features, and determines the n original intermediate results obtained by separately computing the n visual features, the service end is specifically configured to: determine k visual features based on the first control information and the second control information, where the k visual features are a union set of the m visual features and the n visual features, where $m \leq k$, $n \leq k$, and $q \geq k$; separately compute the k visual features (for example, invoke a computing processing module of the k visual features to perform computation), to obtain k original intermediate results of the k visual features; determine the m original intermediate results that are in the k original intermediate results and that respectively correspond to the m visual features; and determine the n original intermediate results that are in the k original intermediate results and that respectively correspond to the n visual features.

In this way, the service end does not need to repeatedly perform a plurality of computations for a same feature, so that a plurality of client ends can share a computation result and a computing resource of the service end for the same feature. In addition, after the service end processes (for example, extracts or compresses) the uniformly computed original intermediate result of the corresponding visual feature based on the control information of the corresponding client end, a data amount of an obtained intermediate rendering result is lower. In this way, when the service end transmits the bitstream of the intermediate rendering result to the client end, the bandwidth requirement on the client end can be reduced.

In this embodiment, when there are a large quantity of client ends, the k visual features may be first determined and uniformly computed to obtain k original intermediate results. In this way, processing efficiency is higher.

In a possible implementation, when the service end determines the m original intermediate results obtained by separately computing the m visual features, the service end is specifically configured to: separately compute the m visual features for which the first control information indicates to start rendering, to obtain the m original intermediate results of the m visual features.

In this embodiment, control information response processing may be performed for different client ends in a specific sequence. For example, feature computation is first performed for the first client end, to obtain the m original intermediate results.

In a possible implementation, when the service end determines the n original intermediate results obtained by separately computing the n visual features, the service end is specifically configured to: determine p visual features that are different from the m visual features and that are in the n visual features for which the second control information indicates to start rendering, where $1 \leq p < n$; separately compute the p visual features to obtain p original intermediate results of the p visual features; and determine, in the m original intermediate results, i original intermediate results respectively corresponding to i visual features, where the i visual features are same visual features between the m visual features and the n visual features, and i+p=n.

In this embodiment, control information response processing may be performed for different client ends in a specific sequence. For example, feature computation is first performed for the first client end to obtain m original intermediate results; and then a repeated feature between the first client end and the second client end is compared, and a non-repeated feature is also computed to obtain an original intermediate result. For a repeated feature, i corresponding original intermediate results computed for the first client end may be directly reused, to implement sharing of the computing resource.

In a possible implementation, the first image and the second image are rendered images of a same scene at different fields of view.

The scene may be a two-dimensional scene or a three-dimensional scene.

For example, if the two-dimensional scene is one piece of A4 paper, and the visual feature is direct illumination, the first image may be an image that is from a field of view to a left half part of the A4 paper and that has direct illumination, the second image may be an image that is from a field of view to a right half part of the A4 paper and that has direct illumination.

In a possible implementation, the visual feature includes at least one of the following:

direct illumination, reflected illumination, shadow, indirect illumination, spherical reflection, and ambient light shielding.

In a possible implementation, this application provides an image rendering method. The method includes: A service end receives first control information of a first image from a first client end; and the service end separately controls computing processing processes of m visual features based on the first control information, to obtain m first intermediate rendering results that are of the first image and that are related to the m visual features, where $m \geq 2$; and sends the m first intermediate rendering results to the first client end. The m first intermediate rendering results are used to provide the first client end with a rendering resource for rendering the first image.

The rendering resource is a rendering resource of the m visual features, for example, an intermediate rendering result.

In a possible implementation, a quantity q of visual features supported by the service end for computing processing is greater than or equal to m, and the m visual features are visual features for which the first control information indicates to start rendering.

In a possible implementation, the service end is configured with q computing processing modules that respectively perform computing processing on q visual features, where $q \geq m$. That the service end separately controls the computing processing processes of the m visual features based on the first control information includes: The service end invokes m computing processing modules that are in the q computing processing modules and that correspond to the m visual features to separately perform computing processing on the m visual features based on the first control information, to obtain the m first intermediate rendering results that are of the first image and that are related to the m visual features.

In a possible implementation, the method further includes: The service end receives second control information of a second image from a second client end; the service end separately controls computing processing processes of n visual features based on the second control information, to obtain n second intermediate rendering results that are of the second image and that are related to the n visual features, where $q \geq n \geq 1$, and the n visual features are visual features for which the second control information indicates to start rendering; and sends the n second intermediate rendering results to the second client end, where the n second intermediate rendering results are used to provide the second client end with a rendering resource for rendering the second image.

In a possible implementation, that the service end separately controls the computing processing processes of the n visual features based on the second control information, to obtain the n second intermediate rendering results that are of the second image and that are related to the n visual features includes: The service end invokes n computing processing modules that are in the q computing processing modules and that correspond to the n visual features to separately perform computing processing on the n visual features based on the second control information, to obtain the n second intermediate rendering results that are of the second image and that are related to the n visual features.

In a possible implementation, that the service end separately controls computing processing processes of the m visual features based on the first control information, to obtain the m first intermediate rendering results that are of the first image and that are related to the m visual features includes: The service end determines m original intermediate results obtained by separately computing the m visual features; and the service end separately processes the m original intermediate results based on the first control information, to obtain the m first intermediate rendering results that are of the first image and that are of the m visual features, where a data amount of the m first intermediate rendering results is less than a data amount of the m original intermediate results.

In a possible implementation, the first control information includes first indication information indicating extraction strategies of the respective intermediate rendering results of the m visual features. That the service end separately processes the m original intermediate results based on the first control information, to obtain the m first intermediate rendering results that are of the first image and that are of the m visual features includes: The service end separately extracts m groups of partial intermediate results from the m original intermediate results based on the first indication information, to obtain the m first intermediate rendering results of the m visual features.

In a possible implementation, the first control information includes third indication information indicating encoding strategies of the respective intermediate rendering results of the m visual features. That the service end separately processes the m original intermediate results based on the first control information, to obtain the m first intermediate rendering results that are of the first image and that are of the m visual features includes: The service end separately encodes, based on the third indication information, the m original intermediate results or the m groups of partial intermediate results extracted from the m original intermediate results, to obtain the m first intermediate rendering results of the m visual features.

In a possible implementation, that the service end separately controls the computing processing processes of the n visual features based on the second control information, to obtain the n second intermediate rendering results that are of the second image and that are related to the n visual features includes: The service end determines n original intermediate results obtained by separately computing the n visual features; and the service end separately processes the n original intermediate results based on the second control information, to obtain the n second intermediate rendering results that are of the second image and that are of the n visual features, where a data amount of the n second intermediate rendering results is less than a data amount of the n original intermediate results.

In a possible implementation, the second control information includes second indication information indicating extraction strategies of the respective intermediate rendering results of the n visual features. That the service end separately processes the n original intermediate results based on the second control information, to obtain the n second intermediate rendering results that are of the second image and that are of the n visual features includes: The service end separately extracts n groups of partial intermediate results from the n original intermediate results based on the second indication information, to obtain the n second intermediate rendering results of the n visual features.

In a possible implementation, the second control information includes fourth indication information indicating encoding strategies of the respective intermediate rendering results of the n visual features. That the service end separately processes the n original intermediate results based on the second control information, to obtain the n second intermediate rendering results that are of the second image and that are of the n visual features includes: The service end separately encodes, based on the fourth indication information, the n original intermediate results or the n groups of partial intermediate results extracted from the n original intermediate results, to obtain the n second intermediate rendering results of the n visual features.

In a possible implementation, that the service end determines the m original intermediate results obtained by separately computing the m visual features includes: The service end determines k visual features based on the first control information and the second control information, where the k visual features are a union set of the m visual features and the n visual features, $m \leq k$, $n \leq k$, and $q \geq k$; the service end separately computes the k visual features to obtain k original intermediate results of the k visual features; and the service end determines the m original intermediate results that are in the k original intermediate results and that respectively correspond to the m visual features.

In a possible implementation, that the service end determines the n original intermediate results obtained by separately computing the n visual features includes: The service end determines the n original intermediate results that are in the k original intermediate results and that respectively correspond to the n visual features.

In a possible implementation, that the service end determines the m original intermediate results obtained by respectively computing the m visual features includes: The service end separately computes the m visual features for which the first control information indicates to start rendering, to obtain the m original intermediate results of the m visual features.

In a possible implementation, that the service end determines the n original intermediate results obtained by separately computing the n visual features includes: The service end determines p visual features that are different from the m visual features and that are in the n visual features for which the second control information indicates to start rendering, where $1 \leq p < n$; the service end separately computes the p visual features to obtain p original intermediate results of the p visual features; and the service end determines, in the m original intermediate results, i original intermediate results respectively corresponding to i visual features, where the i visual features are same visual features between the m visual features and the n visual features, and $i+p=n$.

In a possible implementation, the first image and the second image are rendered images of a same scene at different fields of view.

In a possible implementation, the visual features include at least one of the following: direct illumination, reflected illumination, shadow, indirect illumination, spherical reflection, and ambient light shielding.

Effect of the image rendering method in the foregoing implementations is similar to effect of the image rendering method performed by the service end in the foregoing implementations. Details are not described herein.

In a possible implementation, this application provides an image rendering method. The method includes: A client end sends first control information of a first image to a service end, where the first control information is used to provide the service end with information for controlling respective computing processing processes of m visual features, and m≥2; the client end receives, from the service end, m first intermediate rendering results that are in response to the first control information; and the client end obtains a first rendering result of the first image based on the m first intermediate rendering results of the m visual features.

In a possible implementation, that the client end sends the first control information of the first image to the service end includes: The client end sends the first control information of the first image to the service end when the client end determines that a scene is updated and/or a camera posture is updated.

In a possible implementation, that the client end sends the first control information of the first image to the service end includes: The client end sends, to the service end, control information indicating to start rendering for the m visual features; and/or the client end sends, to the service end, control information indicating extraction strategies of the respective intermediate rendering results of the m visual features; and/or the client end sends, to the service end, control information indicating encoding strategies of the respective intermediate rendering results of the m visual features.

In a possible implementation, before sending, by the client end, the first control information of the first image to the service end, the method further includes: The client end obtains target environment information, where the target environment information includes at least one of the following: network environment information of the client end, scene information of the first image, and user input information; and the client end determines the first control information of the first image based on the target environment information.

In a possible implementation, the m visual features include at least one of the following: direct illumination, reflected illumination, shadow, indirect illumination, spherical reflection, and ambient light shielding.

Effect of the image rendering method in the foregoing implementations is similar to effect of the image rendering method performed by the client end in the foregoing implementations. Details are not described herein.

In a possible implementation, this application provides an image rendering method. The method includes: A control module receives first control information of a first image from a first client end; the control module outputs first information based on the first control information, where the first information indicates a rendering module to start rendering for m visual features; the control module receives m original intermediate results from the rendering module, where the m original intermediate results are respective feature computation results obtained by the rendering module by separately computing the m visual features; and the control module separately processes the m original intermediate results based on the first control information to obtain the m first intermediate rendering results that are of the first image and that are of the m visual features, where a data amount of the m first intermediate rendering results is less than a data amount of the m original intermediate results, and m≥2. The m first intermediate rendering results are used to provide the first client end with a rendering resource for rendering the first image.

In a possible implementation, a quantity q of visual features supported by the control module for computing processing is greater than or equal to m, and the m visual features are visual features for which the first control information indicates to start rendering.

In a possible implementation, the control module is configured with q sub-control modules that respectively process q visual features, where q≥m. That the control module separately processes the m original intermediate results based on the first control information to obtain the m first intermediate rendering results that are of the first image and that are of the m visual features includes: m sub-control modules that are in the q sub-control modules and that correspond to the m visual features separately processes the m original intermediate results based on the first control information, to obtain the m first intermediate rendering results that are of the first image and that are of the m visual features.

In a possible implementation, the first control information includes first indication information indicating extraction strategies of the respective intermediate rendering results of the m visual features. That the control module separately processes the m original intermediate results based on the first control information, to obtain the m first intermediate rendering results that are of the first image and that are of the m visual features includes: The control module separately extracts m groups of partial intermediate results from the m original intermediate results based on the first indication information, to obtain the m first intermediate rendering results of the m visual features.

In a possible implementation, the first control information includes third indication information indicating encoding strategies of the respective intermediate rendering results of the m visual features. That the control module separately processes the m original intermediate results based on the first control information, to obtain the m first intermediate rendering results that are of the first image and that are of the m visual features includes: The control module separately encodes, based on the third indication information, the m original intermediate results or the m groups of partial intermediate results extracted from the m original intermediate results, to obtain the m first intermediate rendering results of the m visual features.

In a possible implementation, the method further includes: The control module receives second control information of a second image from a second client end; the control module outputs second information based on the second control information, where the second information indicates the rendering module to start rendering for the n visual features; the control module receives n original intermediate results from the rendering module, where the n original intermediate results are respective feature computation results obtained by the rendering module by separately computing the n visual features; and the control module separately processes the n original intermediate results based on the second control information, to obtain n second intermediate rendering results of the n visual features of the second image, where a data amount of the n second intermediate rendering results is less than a data amount of the n original intermediate results; and $q \geq n \geq 1$. The n second intermediate rendering results are used to provide the second client end with a rendering resource for rendering the second image.

In a possible implementation, the second control information includes second indication information indicating extraction strategies of the respective intermediate rendering results of the n visual features. That the control module separately processes the n original intermediate results based on the second control information, to obtain the n second intermediate rendering results that are of the second image and that are of the n visual features, includes: The control module separately extracts n groups of partial intermediate results from the n original intermediate results based on the second indication information, to obtain the n second intermediate rendering results of the n visual features.

In a possible implementation, the second control information includes fourth indication information indicating encoding strategies of the respective intermediate rendering results of the n visual features. That the control module separately processes the n original intermediate results based on the second control information, to obtain the n second intermediate rendering results that are of the second image and that are of the n visual features includes: The control module separately encodes, based on the fourth indication information, the n original intermediate results or the n groups of partial intermediate results extracted from the n original intermediate results, to obtain the n second intermediate rendering results of the n visual features.

In a possible implementation, the method further includes: The control module determines k visual features based on the first control information and the second control information, where the k visual features are a union set of the m visual features and the n visual features, where $m \leq k$, $n \leq k$, and $q \geq k$; the control module outputs third information, where the third information indicates a rendering module to separately start rendering for the k visual features, and the first information and the second information are combined into the third information; and the control module and receives k original intermediate results from the rendering module, where the k original intermediate results are respective feature computation results obtained by the rendering module by separately computing the k visual features. The m original intermediate results are original intermediate results that are in k original intermediate results and that respectively correspond to the m visual features, and the n original intermediate results are original intermediate results that are in the k original intermediate results and that respectively correspond to the n visual features.

In a possible implementation, this application further provides an image rendering method. The method includes: A rendering module receives first information from a control module, where the first information indicates the rendering module to start rendering for m visual features; the rendering module separately computes the m visual features based on the first information to obtain m original intermediate results, where $m \geq 2$; and the rendering module sends the m original intermediate results to the control module.

In a possible implementation, a quantity q of visual features supported by the rendering module for rendering is greater than or equal to m.

In a possible implementation, the rendering module is configured with q sub-rendering modules that respectively perform computing processing on q visual features, where $q \geq m$; and that the rendering module separately computes the m visual features based on the first information to obtain the m original intermediate results includes: m sub-rendering modules that are in the q sub-rendering modules and that correspond to the m visual features separately compute the m visual features to obtain the m original intermediate results that are of the first image and that are related to the m visual features.

In a possible implementation, the method further includes: The rendering module receives second information from the control module, where the second information indicates the rendering module to start rendering for the n visual features; the rendering module separately computes the n visual features based on the second information to obtain n original intermediate results, where $q \geq n \geq 1$; and the rendering module sends the n original intermediate results to the control module.

In a possible implementation, that the rendering module separately computes the n visual features based on the second information, to obtain the n original intermediate results includes: n sub-rendering modules that are in the q sub-rendering modules and that correspond to the n visual features separately compute the n visual features, to obtain the n original intermediate results that are of the second image and that are related to the n visual features.

In a possible implementation, the method further includes: The rendering module receives third information from the control module, where the third information indicates the rendering module to separately start rendering for the k visual features, the k visual features are a union set of the m visual features and the n visual features, where $m \leq k$, $n \leq k$, and $q \geq k$, and the

first information and the second information are combined into the third information; the rendering module separately computes the k visual features to obtain k original intermediate results of the k visual features, where the k visual features are a union set of the m visual features and the n visual features, m≤k, n≤k, and q≥k, and the m original intermediate results are original intermediate results that are in the k original intermediate results and that respectively correspond to the m visual features, and the n original intermediate results are original intermediate results that are in the k original intermediate results and that respectively correspond to the n visual features; and the rendering module sends the k original intermediate results to the control module.

In a possible implementation, this application provides an image rendering apparatus. The apparatus includes: a receiving module, configured to receive first control information of a first image; and a control module, configured to: separately control computing processing processes of m visual features based on the first control information, to obtain m first intermediate rendering results that are of the first image and that are related to the m visual features, where m≥2; and send the m first intermediate rendering results to the first client end. The m first intermediate rendering results are used to provide the first client end with a rendering resource for rendering the first image.

The image rendering apparatus may be the foregoing service end, and a specific functional module in the apparatus may be a module that implements the foregoing method on the service end.

Effect of the image rendering apparatus in the foregoing implementations is similar to effect of the image rendering method performed by the service end in the foregoing implementations. Details are not described herein.

In a possible implementation, this application provides an image rendering apparatus. The apparatus includes: a sending module, configured to send first control information of a first image to a service end, where the first control information is used to provide the service end with information for controlling respective computing processing processes of m visual features, and m≥2; a receiving module, configured to receive, from the service end, m first intermediate rendering results that are in response to the first control information; and a processing module, configured to obtain a first rendering result of the first image based on the m first intermediate rendering results of the m visual features.

The image rendering apparatus may be the foregoing client end, and a specific functional module in the apparatus may be a module that implements the foregoing method on the client end.

Effect of the image rendering apparatus in the foregoing implementations is similar to effect of the image rendering method performed by the client end in the foregoing implementations. Details are not described herein.

In a possible implementation, this application provides an image rendering apparatus. The image rendering apparatus includes one or more interface circuits and one or more processors. The interface circuit is configured to: receive a signal from a memory, and send the signal to the processor. The signal includes computer instructions stored in the memory. When the processor executes the computer instructions, the processor may implement the method performed by the service end or the client end in any one of the foregoing implementations.

Effect of the image rendering apparatus in this implementation is similar to effect of the image rendering method in the foregoing implementations. Details are not described herein.

In a possible implementation, this application provides a computer-readable storage medium. The computer-readable storage medium stores a computer program. When the computer program is run on a computer or a processor, the computer or the processor is enabled to perform the method performed by the service end or the client end in any one of the foregoing implementations.

Effect of the computer-readable storage medium in this implementation is similar to effect of the image rendering method in the foregoing implementations. Details are not described herein.

In a possible implementation, this application provides a computer program product. The computer program product includes a software program. When the software program is executed by a computer or a processor, the method performed by the client end or the method performed by the service end in any one of the foregoing implementations is performed.

Effect of the computer program product in this implementation is similar to effect of the image rendering method in the foregoing implementations. Details are not described herein.

**BRIEF DESCRIPTION OF DRAWINGS**

FIG. 1 is a diagram of an example of a system architecture;
FIG. 2 is a diagram of an example of an interaction process;
FIG. 3A and FIG. 3B are a diagram of an example of an interaction process;
FIG. 4a is a diagram of an example of a processing process;
FIG. 4b is a diagram of an example of a processing process;
FIG. 5A and FIG. 5B are a diagram of an example of an interaction process;
FIG. 6a is a flowchart of an example of image rendering;
FIG. 6b is a flowchart of an example of image rendering;

FIG. 7A and FIG. 7B are a diagram of an example of an interaction process;

FIG. 8a is a diagram of an example of a processing process of a service end;

FIG. 8b is a diagram of an example of a processing process of a service end;

FIG. 8c is a diagram of an example of a processing process of a service end;

FIG. 8d is a diagram of an example of a processing process of a service end;

FIG. 8e is a diagram of an example of a processing process of a service end;

FIG. 9a is a diagram of an example of a processing process of a client end;

FIG. 9b is a diagram of an example of a processing process of a client end;

FIG. 9c is a diagram of an example of a processing process of a client end;

FIG. 10 is a diagram of an example of an interaction process;

FIG. 11 is a diagram of an example of a development process;

FIG. 12 is a diagram of a structure of an apparatus according to an embodiment of this application; and

FIG. 13 is a diagram of a structure of a chip according to an embodiment of this application.

## DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not describe a particular order of the objects. For example, a first target object and a second target object are used to distinguish between different target objects, but are not used to describe a particular order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In descriptions of embodiments of this application, "a plurality of" means two or more, unless otherwise specified. For example, a plurality of processing units are two or more processing units, and a plurality of systems are two or more systems.

In three-dimensional (3D) computer graphics, ray tracing (Ray Tracing, RT) is a rendering technology used to generate an image by tracing a path of light in pixels in an image plane and simulating effect of meeting the light with a virtual object. Ray tracing generates high-quality and realistic images by simulating propagation of rays in a 3D scene and interaction between the simulated rays and the 3D scene. Common visual effect of ray tracing computation includes direct illumination (Direct Light), indirect illumination (for example, diffuse reflection), specular reflection, glossy reflection, shadow, scattering, caustic, and the like. The ray tracing technology is mainly used in fields such as gaming and virtual reality. An image rendered by using the ray tracing technology can produce a high visual reality, and can significantly enhance picture quality, thereby improving user experience.

However, computing of the ray tracing technology needs to consume high computing power. Currently, a visual picture of ray tracing is mainly displayed on a personal computer (Personal Computer, PC) with high hardware computing power. However, because a computing capability and a memory capacity on a mobile terminal (for example, a mobile phone or a tablet computer) side are limited, it is difficult to obtain, through real-time rendering, a picture with visual effect of ray tracing.

To get rid of a limitation of a hardware capability of a mobile terminal and implement image rendering effect of PC-level ray tracing on the mobile terminal side, this application provides a method, an apparatus, and a system. In the method, a cloud collaborates with the mobile terminal to implement real-time rendering of a picture of visual effect (for example, direct illumination, planar reflection, or shadow) of ray tracing (referred to as "RT" for short) on a mobile terminal side, and real-time rendering performance of the picture and rendering quality of the picture of the mobile terminal can be enhanced, thereby improving user experience.

The method and the system in this application may be applied to various scenarios in which an image with light tracing effect needs to be displayed, for example, a game scene or a virtual reality scenario. This is not limited in embodiments of this application.

The following describes the technical solutions of this application by using a game scene as an example. When this application is applied to another scene, implementation principles of the solutions are similar, and details are not described herein again.

The system in this application may include a client end 100 and a service end 200. The client end 100 may be a game instance (for example, a game executable program) installed and run on a mobile terminal (referred to as a "terminal side" for short), and the service end 200 may be a game instance (for example, a game executable program) installed and run on a cloud (referred to as a "cloud side" for short) used with the client end.

The cloud may be a server or a virtual instance (for example, a virtual machine or a container) running on the server. This is not limited herein. For example, the cloud is a computing server.

In some embodiments, the client end 100 and the service end 200 each may be implemented in hardware including one or more signal processing circuits and/or application-specific integrated circuits, software, or a combination of hardware and software.

An implementation process of the method in this application may include a process in a development state and a process in a runtime state. In the development state, the apparatus 300 in this application may be used to extend a function of an existing game engine, to develop a game instance, for example, the client end 100 and the service end 200.

In the runtime state, terminal-cloud collaboration may be performed by running the client end 100 on the mobile terminal and running the service end 200 on the cloud, to render, on the mobile terminal in real time, a picture of visual effect of ray tracing.

Visual effect of ray tracing in this application is described below through a "feature" or a "visual feature".

The visual feature may be a rendering feature formed by simulating real bouncing of a light ray in a scene according to a ray tracing algorithm. Therefore, the feature may include but is not limited to direct illumination, indirect illumination, planar reflection, curved surface reflection, soft shadow, hard shadow, ambient light shielding, transparent refraction, subsurface scattering, and the like.

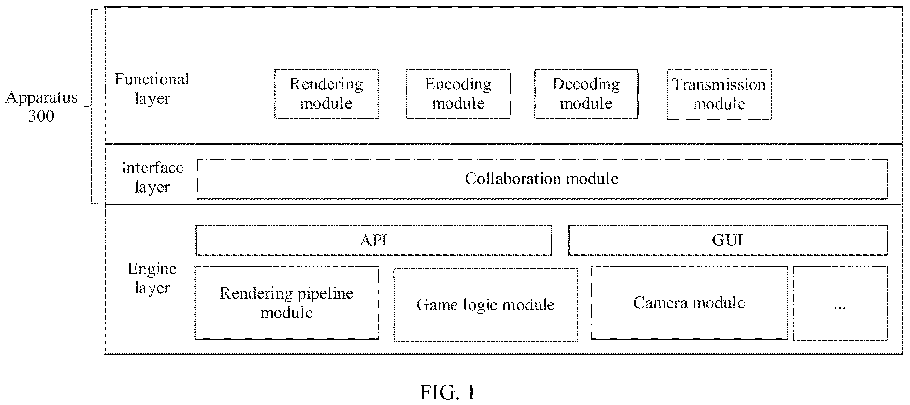

FIG. 1 is a diagram of an example of a system architecture according to this application.

When the game instance (for example, the client end 100 and the service end 200) is developed based on an existing game engine, this application provides an apparatus 300 shown in FIG. 1.

As shown in FIG. 1, in a development state, an engine layer may be an engine system of the existing game engine, and the apparatus 300 in this application may include a functional layer and an interface layer. The apparatus 300 may be built above an original module (for example, the engine layer) of the existing game engine.

During specific implementation, the apparatus 300 including the functional layer and the interface layer may be used as plug-ins of the existing game engine, so that a game developer uses the apparatus 300 to extend a function of the existing game engine, to separately obtain the game instance (for example, the client end 100) that can be installed on the mobile terminal, and the game instance (for example, the service end 200) that may be installed on the cloud.

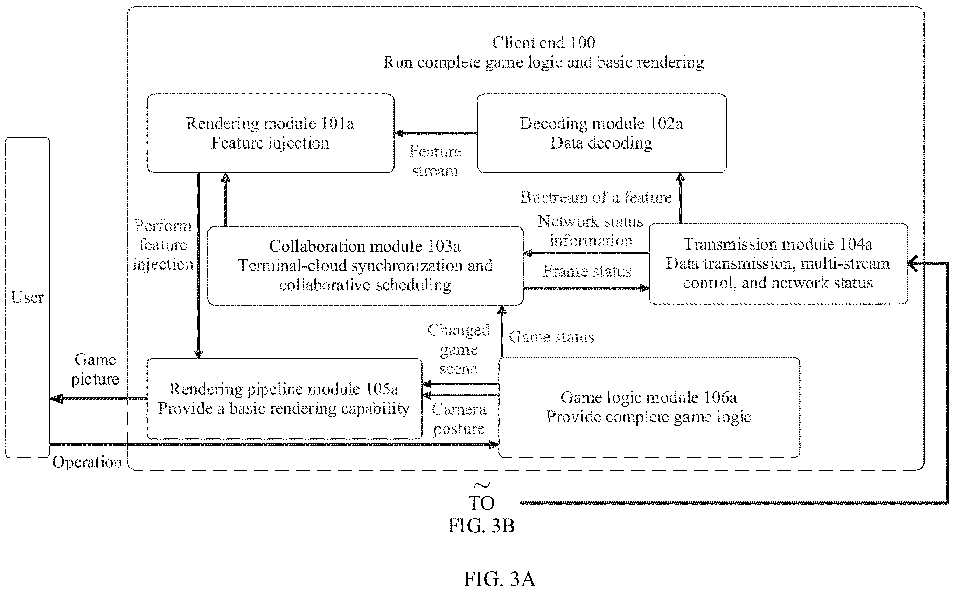

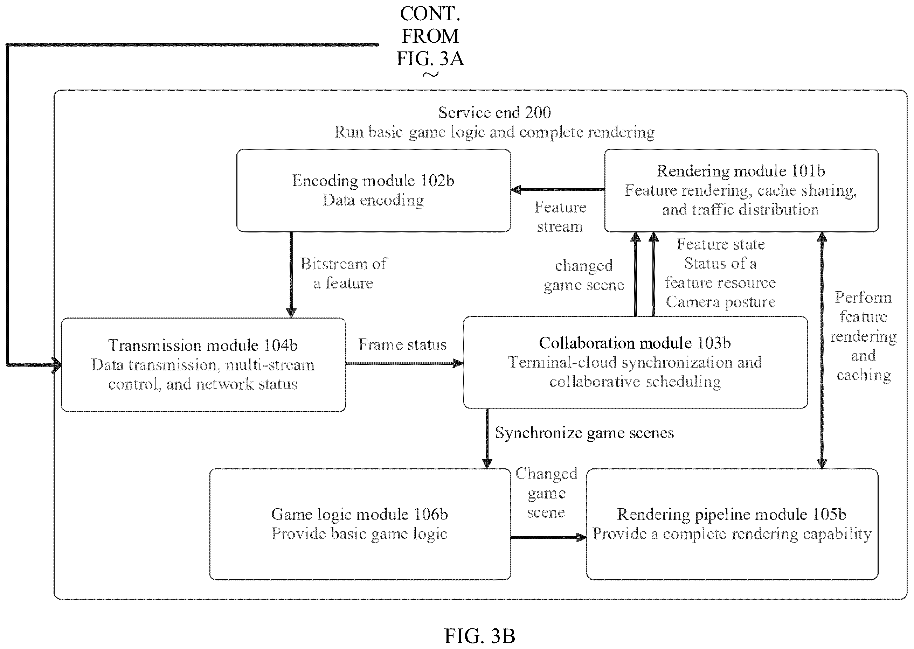

For composition of internal modules of the client end 100 and the service end 200 that are in the runtime state and that are obtained through development, refer to FIG. 3A and FIG. 3B. Details are described below.

As shown in FIG. 1, the engine layer may include but is not limited to a rendering pipeline module, a game logic module, and a camera module.

In addition, in a development state, the engine layer may further provide an application programming interface (Application Programming Interface, API) for an upper layer (for example, the interface layer in this application) to invoke, for example, extend the function of the game engine. In addition, in the development state, the engine layer also provides a graphical user interface (Graphical User Interface, GUI) for the entire system, and presents, in a user-friendly manner, an interaction interface of each module in the system shown in FIG. 1.

For specific module composition inside the engine layer, refer to internal composition of the engine layer in the existing game engine or a game engine developed in the future. This is not limited herein.

It should be understood that the API and the GUI at the engine layer shown in FIG. 1 may be used to develop the client end 100 and the service end 200, and the client end 100 and the service end 200 that are packaged and released no longer include the API and the GUI that are used in the development state.

The interface layer may include a collaboration module in this application.

The functional layer in this application may include but is not limited to a rendering module, an encoding module, a decoding module, and a transmission module.

The collaboration module may provide an interface (a "plug-in interface" for short) of the foregoing plug-in (the apparatus 300 herein) in this application, to implement interaction between the functional layer and the engine layer, and implement interaction between modules at the functional layer.

In addition, the collaboration module may further provide a terminal-side collaboration function (for example, terminal-cloud synchronization and collaborative scheduling) and a cloud-side collaboration function (for example, terminal-cloud synchronization and collaborative scheduling). The collaboration functions of the collaboration module on the terminal side and the cloud side are described in detail in the embodiment of the runtime state. Details are not described herein again.

FIG. 1 is a diagram of an example of a structure of a system framework. It should be understood that a system shown in FIG. 1 is merely an example, and the system in this application may have more or fewer components than those shown in the figure, may combine two or more components, or may have different component configurations. The components shown in FIG. 1 may be implemented in hardware, software, or a combination of hardware and software including one or more signal processors and/or application-specific integrated circuits.

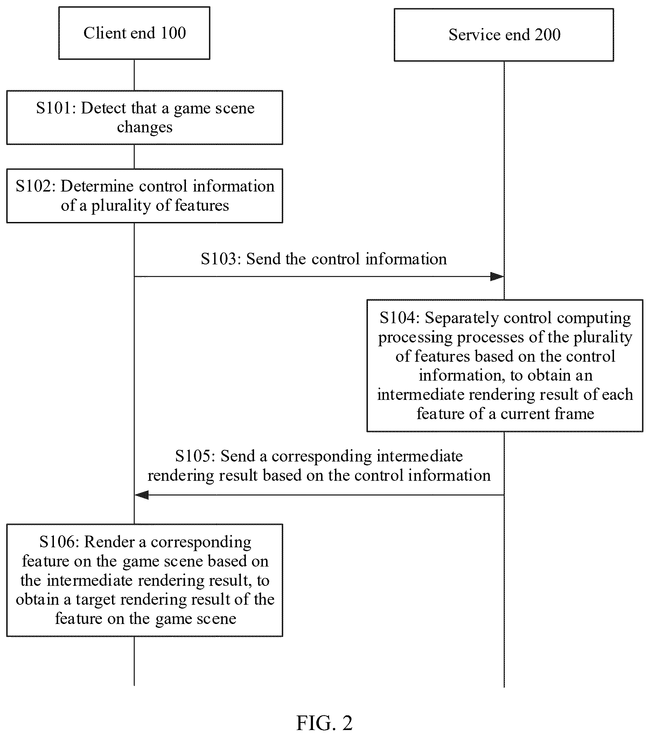

FIG. 2 is a diagram of an example of an interaction process between the client end 100 deployed on the mobile terminal and the service end 200 deployed on the cloud.

With reference to the system architecture shown in FIG. 1, FIG. 3A and FIG. 3B show an example of an interaction process between internal modules of the client end 100 shown in FIG. 2, an interaction process between internal modules of the service end 200, and an interaction process between the client end 100 and the service end 200.

As shown in FIG. 3A and FIG. 3B, the client end 100 developed via the apparatus 300 shown in FIG. 1 in this application may include but is not limited to a rendering module 101a, a decoding module 102a, a collaboration module 103a, a transmission module 104a, a rendering pipeline module 105a, and a game logic module 106a.

As shown in FIG. 3A and FIG. 3B, the service end 200 developed via the apparatus 300 shown in FIG. 1 in this application may include but is not limited to a rendering module 101b, an encoding module 102b, a collaboration module 103b, a transmission module 104b, a rendering pipeline module 105b, and a game logic module 106b.

FIG. 3A and FIG. 3B are a diagram of an example of structures of the client end and the service end. It should be understood that the structures of the client end 100 and the service end 200 shown in FIG. 3A and FIG. 3B are merely examples. The modules in the client end 100 may be split or combined, and include more or fewer modules, or may have different module configurations. The modules in the service end 200 may be split or combined, and include more or fewer modules, or may have different module configurations. The modules in the client end 100 shown in FIG. 3A and FIG. 3B may be implemented in hardware including one or more signal processing circuits and/or application-specific integrated circuits, software, or a combination of hardware and software. In addition, the modules in the service end 200 shown in FIG. 3A and FIG. 3B may be implemented in hardware including one or more signal processing circuits and/or application-specific integrated circuits, software, or a combination of hardware and software.

The following describes an interaction procedure between the client end 100 and the service end 200 shown in FIG. 2 with reference to FIG. 3A, FIG. 3B, FIG. 4a, FIG. 4b, FIG. 5A, and FIG. 5B.

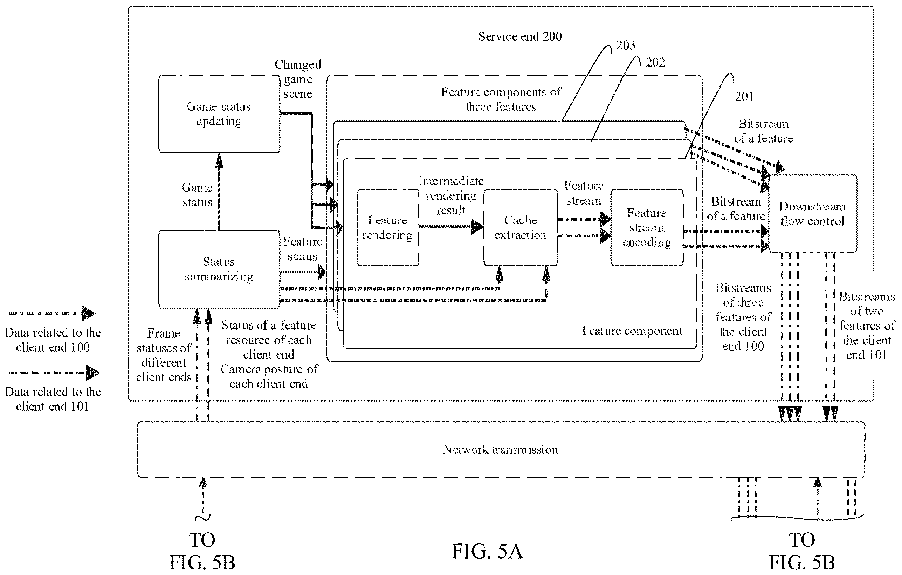

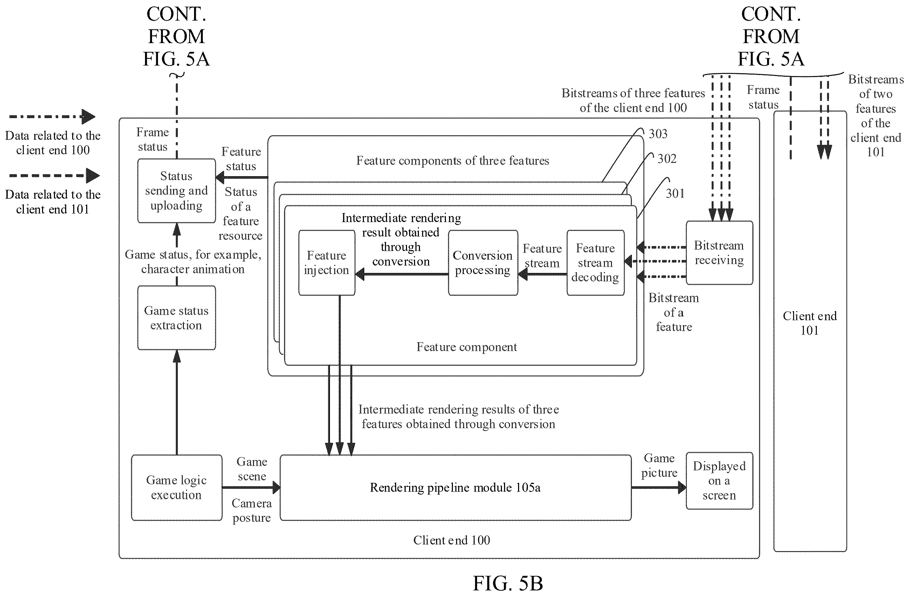

FIG. 5A and FIG. 5B show an example of interaction processes between a plurality of client ends (for example, the client end 100 and a client end 101) and the service end 200.

As shown in FIG. 2, the process may include the following steps.

S101: The client end 100 detects that a game scene changes.

In this embodiment, an example in which the process is applied to a game is used. In this case, a rendering scene herein is a game scene.

In some embodiments, the rendering scene may be a three-dimensional scene, or may be a two-dimensional scene. This is not limited herein.

The following describes S101 with reference to FIG. 3A and FIG. 3B.

As shown in FIG. 3A and FIG. 3B, the client end 100 may run on the mobile terminal. The game logic module 106a in the client end 100 may provide complete game logic. The game logic module 106a may receive an operation of a user on a game, and execute game logic in response to the operation of the user.

In a process of running one frame of game picture, the client end 100 may execute game logic (for example, movement of a virtual character in the game, which is not limited herein) to cause a game status change.

The collaboration module 103a may detect, from the game logic module 106a, a game status change, for example, a change of a character animation on a game scene, a status change of a light source on the game scene, a status change of an object on the game scene, and a scene change are all game status changes (which are not limited herein). The collaboration module 103a may obtain a changed game status from the game logic module 106a.

A game status change may cause a game scene to change. Therefore, the terminal side needs to render a changed game scene, to display a game picture updated due to an operation performed by the user on the game.

In the embodiments of FIG. 2 to FIG. 6 in this application, an example in which a game status changes but a camera posture does not change is used for description.

As shown in FIG. 3A and FIG. 3B, when the game scene changes, the game logic module 106a may further send the camera posture to the collaboration module 103a to synchronize the camera posture to the cloud, and send the camera posture to the rendering pipeline module 105a to render the game picture.

It should be understood that, a change of any one of a game scene change and a camera posture change may trigger the client end 100 to control the service end 200 to perform, based on the control information of the client end 100, computing processing on a feature required by the client end 100, and control a computing processing process.

In a possible implementation, as shown in FIG. 3A and FIG. 3B, the game logic module 106a may further detect a change of a camera posture of the client end 100, and synchronize a changed camera posture to the collaboration module 103a.

The rendering pipeline module 105a of the client end 100 may obtain, from the game logic module 106a, the game scene and the camera posture that need to be rendered due to a game status change, to render the game scene based on the camera posture through a basic rendering capability configured in the development state.

S102: The client end 100 may determine control information of a plurality of features.

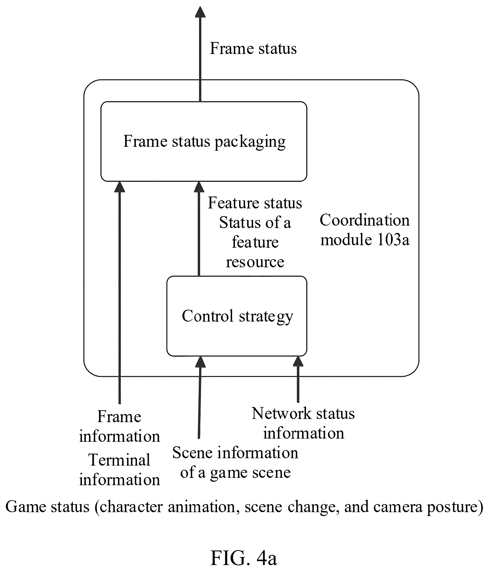

The plurality of features may be some or all features that are configured for the rendering module 101a in the development state and that support rendering, for example, features such as direct illumination, planar reflection, and soft shadow. Specific features may be flexibly determined based on a control strategy (for example, as shown in FIG. 4a) configured for the client end 100.

The control information is control information of an image, and the control information may be used to control a computing processing process performed by the service end 200 on the foregoing plurality of features.

In a possible implementation, when the client end 100 detects that the game scene changes, the client end 100 may obtain a frame status of a current frame (that is, the foregoing image). The frame status is an example of the control information.

As shown in FIG. 3A, FIG. 3B, and FIG. 4a, the collaboration module 103a may obtain a changed game status from the game logic module 106a, for example, a changed character animation, a scene change (for example, a position of an object in a scene or a change of a light source), and a camera posture.

In this embodiment, the game status that is packaged in the frame status and that is obtained by the client end 100 may be a changed game status. In another embodiment, the game status may be a game status obtained before the change and a changed game status (for example, a position obtained before the character animation is moved and a position obtained after the character animation is moved).

In addition, as shown in FIG. 4a, the collaboration module 103a may further obtain frame information of the to-be-rendered current frame (for example, information about a frame to which the game currently runs) and terminal information (for example, information that can identify a mobile terminal or a gamer account).

As shown in FIG. 3A, FIG. 3B, and FIG. 4a, the collaboration module 103a may further obtain, from the transmission module 104a, current network status information of the mobile terminal to which the client end 100 belongs. The network status information may be any parameter that can indicate current network quality, for example, a packet loss rate or a round trip delay. This is not limited herein.

The transmission module 104a of the client end 100 may determine the current network status information based on a transmission status of a bitstream, and synchronize the current network status information to the collaboration module 103a.

In a possible implementation, as shown in FIG. 4a, the collaboration module 103a may further obtain scene information of the game. The scene information may be scene change information in the game status, that is, scene information of a changed game scene.

For example, if a character in a game goes to a scene with a large quantity of reflections, the reflection effect needs to be preferentially ensured in this scene. During specific implementation, a game developer may set specific logic, for example, set a specific boundary for such a scene. After the character in the game enters a region limited by the boundary, the collaboration module 103a is triggered to obtain scene information of the game.

As shown in FIG. 4a, in the development state, the game developer may configure a control strategy of a feature for the collaboration module 103a. The feature is a plurality of features that are supported by the client end 100 and that are configured in the development state for the rendering module and the game pipeline module in the client end 100. The plurality of features supported by the client end 100 may be rendered in a manner of collaborating with the service end 200. Therefore, the plurality of features are also referred to as "collaborative rendering features" below.

The control strategy may control a state (an enabled state or a disabled state) of each of the foregoing plurality of features supported by the client end 100 and a status of a feature resource.

Although the developed client end 100 may support a plurality of features, the collaboration module 103a may flexibly determine, based on current scene information and a current network status, features that are to be enabled or disabled, and determine a status of a feature resource of an enabled feature.

The feature resource is also referred to as an intermediate rendering result (to be obtained through rendering by the service end 200), and a status of the feature resource may include but is not limited to at least one of resolution, a compression rate, and the like of the intermediate rendering result.

In a possible implementation, a user who uses the client end 100 may also manually enter and configure the control strategy in a runtime state, for example, always keep a feature in an enabled state, or keep a feature in a disabled state in the game. This is not specifically limited. Enabling/disabling of the feature and the status of the feature resource of the enabled feature can be flexibly set based on user requirements.

As shown in FIG. 4a, the collaboration module 103a may determine, based on the control strategy and based on the scene information and the current network status, whether each feature of the current frame is enabled or disabled and the status of the feature resource of the enabled feature, to control a computing processing process of the feature by the service end 200 on the cloud.

For example, when the client end 100 is disconnected from a network, the client end 100 may control all collaborative rendering features (for example, some features with visual effect of ray tracing) to be disabled, so that a plurality of features are all in a disabled state. In this way, only the rendering pipeline module 105a on the terminal side may be used to render the current frame to ensure basic game experience, and intermediate rendering results of the foregoing plurality of features of the current frame do not need to be obtained from the service end 200 deployed on the cloud.

For another example, when network bandwidth of the client end 100 is insufficient to support high-quality rendering of a corresponding feature, the collaboration module 103a may adjust and control quality (for example, resolution or a compression rate) of an intermediate rendering result of the corresponding feature that is transmitted from the cloud to the mobile terminal.

For example, when the enabled feature includes reflected illumination, the collaboration module 103a may control resolution of the reflection map to be reduced; when the enabled feature includes shadow, the collaboration module 103a may control resolution of the shadow map to be reduced or control a compression rate of the shadow layer to be improved; or when the enabled feature includes direct illumination, the collaboration module 103a may control resolution of the probe of the direct illumination to be reduced, and the like.

For another example, when network bandwidth of the client end 100 is insufficient to ensure rendering of all collaborative rendering features, the collaboration module 103a may choose to disable some features with low priorities based on the scene information (for example, scene information of a game scene that is changed and that is to be rendered) shown in FIG. 4a.

For example, in a water surface scene (scene information of a game scene), a priority of a reflected illumination feature on the game scene is higher than a priority of a shadow feature. In this case, the collaboration module 103a may choose to disable the shadow feature and enable the reflected illumination feature based on the scene information, to ensure that the current frame rendered by the cloud has a feature that matches the game scene, and to ensure that the light feature in the game picture matches the lighting scene of the game picture.

Still refer to FIG. 3A, FIG. 3B, and FIG. 4a. The collaboration module 103a may package frame information, terminal information, a game status (for example, a character animation or a scene change), a camera posture, a feature status (which is equivalent to a requirement for enabling or disabling each feature), and a status of a feature resource (which is equivalent to an encoding requirement for an enabled feature, for example, a compression rate or resolution) into a frame status of the current frame and send, via the transmission module 104a, the frame status to the service end 200 deployed on the cloud.

In this embodiment of this application, when the collaboration module 103a of the client end 100 detects that the game scene changes, the collaboration module 103a of the client end 100 may dynamically adjust a feature status (for example, enabling or disabling of a feature) of a to-be-rendered current frame based on at least one piece of information such as manual control by the user, a current network status, or a current game scene, and an encoding requirement required when the enabled feature is rendered on the service end 200 in the cloud. In this way, the terminal side and the cloud side render the feature independently of each other, and have independent rendering procedures and computing procedures. In addition, the client end 100 can allow the terminal side to run in a running environment (optionally, a computing environment on the terminal side, a computing environment on the cloud side, or the like) such as a network environment of the terminal side by including, in the frame status, the control information for a to-be-rendered feature on the cloud, to independently control the computing processing process of each feature on the cloud side in real time. In this way, the terminal side synchronizes and controls a rendering status (enabled or disabled) of the feature rendered on the cloud side, an extraction strategy (for example, a strategy related to field of view information such as a camera posture, and/or a resolution requirement for a feature resource) of a feature resource, and a feature resource encoding strategy (for example, a compression rate of a feature resource).

In a possible implementation, in the development state, the collaboration module in the apparatus 300 may provide a script interface, so that the game developer customizes, for the collaboration module 103a in the client end 100, code logic for obtaining the control information of the feature. In this way, the developed collaboration module 103a may obtain, based on the processes in FIG. 3A, FIG. 3B, and FIG. 4a, various status information when the game scene is updated, and package the status information into the frame status, and upload the frame status to the cloud.

In the foregoing embodiment, an example in which the control information in S 102 in FIG. 2 is the frame status is used for description.

In some embodiments, the control information in S 102 may alternatively be at least one of the camera posture, the feature status, and the status of the feature resource shown in FIG. 4a, to control a rendering procedure of a corresponding feature when the service end 200 renders the corresponding feature requested by the client end 100. Specifically, a feature status may be used to control features that are to be rendered by the service end 200. Optionally, the client end 100 may control the service end 200 through the camera posture, to obtain, through rendering, an intermediate rendering result that meets a field of view of the user of the client end 100 and that is of a corresponding feature. Optionally, the client end 100 may control, through the status of the feature resource, resolution of the intermediate rendering result of the feature rendered by the service end 200, a compression rate for encoding the intermediate rendering result, and the like.

In some other embodiments, the control strategy shown in FIG. 4a may alternatively be preconfigured or configured in the collaboration module 103b in the service end 200 shown in FIG. 3A and FIG. 3B in the development state. In this way, the control information sent by the client end 100 to the service end 200 may include but is not limited to the camera posture, the scene information of the game scene, network status information, and the like shown in FIG. 4a. The service end 200 with higher computing power obtains, based on the scene information and the network status information of the game scene and according to a preconfigured control strategy, the feature status and the status of the feature resource that are present when the client end 100 renders the current frame. A principle of a specific implementation process is similar to a principle of obtaining the feature status and the status of the feature resource according to the control strategy on a client end 100 side. Details are not described herein again. In this way, when computing power of the mobile terminal deployed on the client end 100 is low, a cloud with higher computing power may alternatively be used to control, based on a network environment of the mobile terminal, a changed game scene, and a field of view of a game user (which is indicated through a camera posture, or may be indicated through other information that can indicate the field of view of the user), a computing processing process of the client end 100 for the feature of the current frame.

S103: The client end 100 sends the control information to the service end 200.

Still refer to FIG. 3A and FIG. 3B. The collaboration module 103a may send the packaged frame status to the service end 200 via the transmission module 104a.

In a possible implementation, a plurality of users may play a game in a game center. FIG. 5A and FIG. 5B show an example of interaction processes between respective client ends (a client end 100 and a client end 101) of two users in the game center and a service end 200. The client end 100 and the client end 101 play a same game in a same game center, and most content of game pictures respectively displayed by the client end 100 and the client end 101 at a same moment is the same. In other words, the game pictures respectively displayed by the client end 100 and the client end 101 match a field of view of a game user, and are game pictures of different fields of view for the same game scene.

It should be understood that a quantity of client ends that simultaneously interact with the service end 200 is not limited in this application.

Principles of performing the foregoing processes of S101 to S103 by the client end 100 and the client end 101 are similar. With reference to FIG. 5A and FIG. 5B, the following uses the client end 100 as an example to describe a specific process of performing the foregoing processes of S 101 to S103 by the client end 100.

As shown in FIG. 5A and FIG. 5B, feature components of three features may be configured for the client end 100 in the development state: a feature component 301, a feature component 302, and a feature component 303. For example, the feature component 301 is configured to implement a basic rendering process of a direct illumination feature, the feature component 302 implements a basic rendering process of a reflected illumination feature, and the feature component 303 is configured to implement a basic rendering process of a shadow feature.

Similarly, as shown in FIG. 5A and FIG. 5B, feature components of three features may be configured for the service end 200 in the development state: a feature component 201, a feature component 202, and a feature component 203. For example, the feature component 201, the feature component 202, and the feature component 203 are respectively configured to implement computing processing processes of three features supported by the cloud side and the terminal side: direct illumination, reflected illumination, and shadow.

In this way, the client end 100 may support terminal-cloud collaborative rendering of three features: direct illumination, reflected illumination, and shadow.

For example, with reference to FIG. 3A and FIG. 3B, a feature component of each feature in the service end 200 shown in FIG. 5A and FIG. 5B may be a combination of a rendering module 101b, an encoding module 102b, and a collaboration module 103b of corresponding features shown in FIG. 3A and FIG. 3B.

Similarly, with reference to FIG. 3A and FIG. 3B, a feature component of each feature in the client end 100 shown in FIG. 5A and FIG. 5B may be a combination of a rendering module 101a, a decoding module 102a, and a collaboration module 103a of corresponding features shown in FIG. 3A and FIG. 3B.

In this way, a computing procedure and a rendering procedure of each feature are independent of each other on the terminal side or the cloud side.

As shown in FIG. 5A and FIG. 5B, the client end 100 may execute game logic to cause a game status change. When the client end 100 runs a frame of image (game picture) surface, the client end 100 may extract a changed game status (for example, a character animation), and a camera posture (regardless of whether the game status changes), obtain a feature status of the frame of game picture (the foregoing three features are respectively in an enabled state or a disabled state) and a status of a feature resource of each enabled feature (for example, a compression rate and resolution of an intermediate rendering result), package the information to obtain a frame status of the current frame (the foregoing frame of image), and transmit the frame status to the service end 200 over a network.

Similar to an execution principle of the client end 100, the client end 101 also transmits, to the service end 200 over a network, a frame status of the current frame run by the client end 101.

In this embodiment of this application, the frame status of the client end may be synchronized to the service end on the cloud, and feature rendering processes on the terminal side and the cloud side are independent of each other, and have independent rendering and computation procedures. The frame status additionally includes control information of a feature computed and processed on the cloud side, so that the terminal side can be allowed to independently configure each feature on the cloud side in real time based on a running environment (for example, a network status on the terminal side, computing power on the terminal side, and computing power on the cloud side), to dynamically adjust a rendering status (for example, enabling or disabling of a feature) of a feature on the cloud side, an extraction strategy of a feature resource (for example, based on a field of view or a network status, or a resolution requirement of a feature resource), encoding and transmission quality (for example, based on a compression rate requirement) of the feature resource, and the like.

S104: The service end 200 separately controls computing processing processes of the plurality of features based on the control information, to obtain an intermediate rendering result of each feature of the current frame.

For example, the control information in S104 is a frame status. Still refer to FIG. 3A and FIG. 3B. The service end 200 may receive, via the transmission module 104b, a frame status of a current frame uploaded by each client end. As shown in FIG. 5A and FIG. 5B, the service end 200 may receive frame statuses respectively uploaded by the client end 100 and the client end 101.

In some embodiments, as shown in FIG. 3A and FIG. 3B, the transmission module 104b may send a frame status received from each client end to the collaboration module 103b.

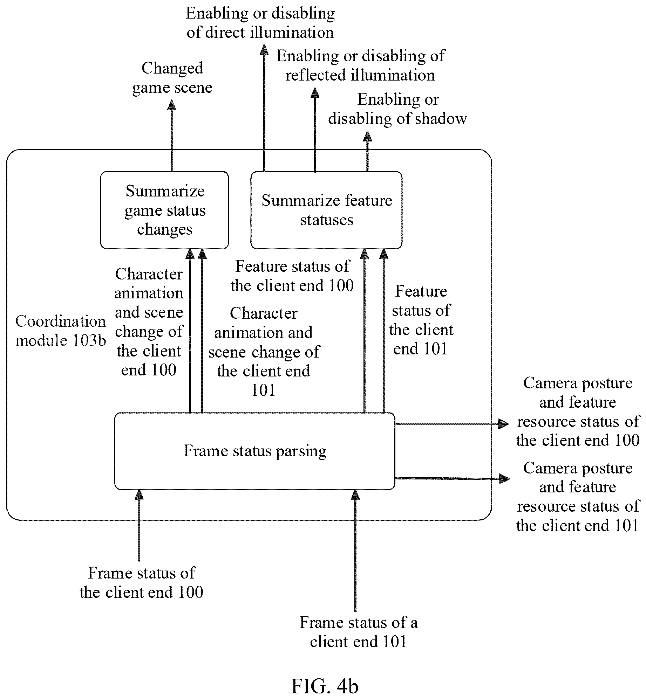

FIG. 4b shows an example of a process in which the collaboration module 103b processes the received frame status of the client end 100 and the received frame status of the client end 101.

As shown in FIG. 4b, the collaboration module 103b may parse a received frame status of each client end, to obtain a game status, for example, a scene change and a character animation of the client end 100, and a game status, for example, a scene change and a character animation of the client end 101. Then, the collaboration module 103b may summarize changes of game statuses of all client ends (herein, the client end 100 and the client end 101) to determine an updated game scene.

For example, a game role A in the client end 100 moves one step, and a game role B in the client end 101 moves two steps. After action changes of game roles of all client ends are summarized, a game scene may be updated. Herein, the collaboration module 103b may summarize game status changes of all the client ends, to determine an updated game scene. Because the game scene is updated, the client end 100, the client end 101, and the service end 100 render a corresponding feature on the game scene.

In some embodiments, the collaboration module 103b of the service end 200 may parse a received frame status of each client end, to determine scene information of a game scene (for example, a character animation) carried in the frame status and camera posture information. The service end 200 may cache the computed intermediate rendering result (full field of view) of each feature of the previous frame, the scene information, and the camera posture information. After the service end 200 receives the frame status of the current frame, the service end 200 may compare camera posture information corresponding to a previous frame with camera posture information corresponding to a current frame, to determine whether the camera posture is updated, and may compare scene information of a game scene corresponding to the previous frame with scene information of a game scene corresponding to the current frame, to determine whether the game scene is updated.

In addition, as shown in FIG. 4b, the collaboration module 103b may further obtain, by parsing the frame status of each client end, a feature status uploaded by each client end. Herein, the feature status is a feature status of the client end 100 and a feature status of the client end 101.

With reference to the foregoing descriptions of the feature components of the client end 100 and the client end 101 shown in FIG. 5A and FIG. 5B, both the client end 100 and the client end 101 support rendering of three features: direct illumination, reflected illumination, and shadow. In this case, when the game scene is updated, the client end 100 may control rendering of the foregoing three features to be enabled for the game scene. In this way, feature statuses of the foregoing three features uploaded by the client end 100 are all enabled.

Similarly, when the game scene is updated, the client end 101 may control two features: direct illumination and reflected illumination for the game scene to be enabled, and control rendering of the shadow feature to be disabled. In this way, feature statuses of the foregoing three features uploaded by the client end 101 are respectively as follows: The direct illumination feature is in an enabled state, the reflected illumination feature is in an enabled state, and the shadow feature is in a disabled state.

In some embodiments, for a feature that does not need to be requested by the client end for rendering this time, a state of the feature may not be uploaded to the service end. For example, the client end 101 may upload only the direct illumination feature to be in an enabled state and the reflected illumination feature to be in an enabled state, in this case, the service end 200 may determine by default that the rendering requirement of the client end 101 for the shadow feature is not rendering.

Optionally, as shown in FIG. 4b, the collaboration module 103b of the service end 200 may summarize feature statuses of all client ends, to obtain a feature status of each feature.

When the collaboration module 103b summarizes the feature statuses, for one feature, as long as a state that is of the feature and that is reported by one client end is an enabled state, a summarized state of the feature is the enabled state; or for one feature, when states of the feature that are reported by all client ends are disabled states, a summarized state of the feature is the disabled state.

In this embodiment, the summarized feature status includes that the direct illumination feature is in the enabled state, the reflected illumination feature is in the enabled state, and the shadow feature is in the enabled state.

In addition, as shown in FIG. 4b, the collaboration module 103b may further obtain, by parsing the frame status of each client end, a status of a feature resource of the client end 100 and a camera posture of the client end 100 (an example of extraction control information), and a status of a feature resource of the client end 101 and a camera posture of the client end 101.

The status of the feature resource uploaded by the client end 100 reflects a rendering requirement (for example, resolution of an intermediate rendering result) and/or an encoding requirement (for example, a compression rate of the intermediate rendering result) of the client end 100 for each of the foregoing three features in the enabled state.

The status of the feature resource uploaded by the client end 101 reflects an extraction requirement (for example, resolution of the intermediate rendering result) and/or an encoding requirement (for example, a compression rate of the intermediate rendering result) of the client end 101 for an intermediate rendering result of each of the foregoing two features (which are respectively the direct illumination feature and the reflected illumination feature) in the enabled state.

In addition, the camera posture uploaded by the client end may reflect a field of view of a game picture viewed by the client end. In this case, when the service end 200 pushes the rendered intermediate rendering result to the client end, the service end 200 only needs to push an intermediate rendering result that matches the field of view.

In some embodiments, the extraction control information that is uploaded by the client end and that is used to extract some intermediate rendering results from unified intermediate rendering results is not limited to information indicating the field of view, and may alternatively be region information (for example, a reflection region). Specific content of the extraction control information may be related to a feature. The extraction control information may be used to reduce bandwidth that is for the client end and that is occupied by the intermediate rendering result delivered by the service end 200 to the client end.

Optionally, the service end 200 may store control information of each client end obtained by the collaboration module 103b through parsing, for example, a requirement for a feature resource (for example, a feature status, a camera posture, or a status of a feature resource), so that the service end 200 controls a computing processing process of each feature. This helps obtain an intermediate rendering result of a corresponding feature that meets a requirement of each client end, and push the intermediate rendering result to the corresponding client end.

With reference to FIG. 4b, refer to FIG. 3A and FIG. 3B. The collaboration module 103b may synchronize a changed game scene, a changed feature status, a changed status of the feature resource, a changed camera posture, and the like to the rendering module 101b, so that the rendering module 101b performs, based on the changed game scene, separately rendering for each feature in an enabled state after summarization.

In this embodiment of this application, to save computing resources of the cloud, when a plurality of client ends (for example, the client end 100 and the client end 101) request the service end 200 to render a same game scene, the service end 200 in this application summarizes feature statuses reported by the plurality of client ends. In this way, each feature that is in an enabled state after summarization is rendered in a unified manner, so that a plurality of client ends can share a computing resource for a same feature. In this way, when a plurality of client ends request to render a same feature, the service end 200 does not need to repeatedly render the same feature for a plurality of times, and only needs to render the same feature once, so that the plurality of client ends can share a computing resource on the cloud.

The rendering module shown in FIG. 3A and FIG. 3B may start a computing processing procedure of each feature based on an updated game scene, an updated feature status, an updated status of a feature resource, an updated camera posture, and the like, to obtain a feature stream of each feature. The encoding module 102b may encode a feature stream of each feature based on the status of the feature resource, to obtain a bitstream of the feature, and transmit the bitstream to the client end 100 via the transmission module 104b.

In a possible implementation, there are a plurality of client ends that request to render a same game scene, for example, the client end 100 and the client end 101 shown in FIG. 5A and FIG. 5B. The following describes a processing process of the service end 200 with reference to FIG. 5A and FIG. 5B.

With reference to FIG. 4b, as shown in FIG. 5A and FIG. 5B, the service end 200 may receive the frame statuses respectively uploaded by the client end 100 and the client end 101, and summarize the frame statuses to obtain a summarized feature status. For example, the direct illumination feature is in an enabled state, and the indirect illumination feature is in an enabled state, the shadow feature is in an enabled state.

As shown in FIG. 5A and FIG. 5B, the service end 200 may further obtain a status of a feature resource and a camera posture of each client end from frame statuses respectively uploaded by the client end 100 and the client end 101.

As shown in FIG. 5A and FIG. 5B, the service end 200 may further summarize game statuses in frame statuses respectively uploaded by the client end 100 and the client end 101, to determine a changed game scene (also referred to as an updated game scene) when the game statuses are updated.

As shown in FIG. 5A and FIG. 5B, feature statuses summarized by the service end 200 are feature statuses of three features supported by the service end 200. Therefore, the service end 200 may perform a computing processing process of the direct illumination feature via the feature component 201, and the computing processing process is controlled based on requirements of the client end 100 and the client end 101. The requirement may be a changed game scene, a feature status of each client end, a status of a feature resource of each client end, a camera posture of each client end, and the like shown in FIG. 5A and FIG. 5B.

Similarly, the service end 200 may further perform a computing processing process of the reflected illumination feature via the feature component 202, and control the computing processing process based on respective requirements of the client end 100 and the client end 101.

In addition, the service end 200 may further perform a computing processing process of the shadow feature via the feature component 203, and control the computing processing process based on respective requirements of the client end 100 and the client end 101.

The following uses an execution process of the feature component 201 as an example to describe a process in which the service end 200 controls, based on a requirement of each client end, execution of a computing processing process of a direct illumination feature. A principle of an execution process of another feature component is similar to the execution principle of the feature component 201 described herein. Details are not described herein again.

As shown in FIG. 5A and FIG. 5B, a summarized feature status of direct illumination is an enabled state. Therefore, the feature component 201 may perform a rendering procedure of direct illumination. In some embodiments, for example, if a feature status of a summarized feature (for example, a shadow feature) is a disabled state, the corresponding feature component 203 does not need to render the shadow feature on a currently changed game scene.

As shown in FIG. 5A and FIG. 5B, first, the feature component 201 may render the direct illumination feature based on a changed game scene, to obtain an intermediate rendering result (for example, an irradiance map) of the feature.

Then, the feature component 201 may write the intermediate rendering result of the feature to the shared cache, so that the client end 100 and the client end 101 can share the intermediate rendering result.

In the conventional technology, a feature rendering method can provide only required feature rendering of a specific field of view. In this embodiment of this application, a rendering method used by each feature component in the service end 200 can support rendering of a shareable intermediate rendering result. In other words, the plurality of client ends may share intermediate rendering results of corresponding features rendered by the service end 200, and extract some results from the intermediate rendering results obtained by the service end 200 by using a field of view (an example of extraction control information) of each client end, to obtain an intermediate rendering result that meets a corresponding feature of the field of view of each client end. In this way, computing resources of same features are shared on the cloud.

In some embodiments, the intermediate rendering result may be stored in a format such as an irradiance map or a lightmap (lightmap), to support a plurality of client ends in extracting, from a cached unified intermediate rendering result, an intermediate rendering result that meets a requirement of the client end.

Then, the feature component 201 may extract, based on the status of the feature resource of each client end and the camera posture of each client end, the cached intermediate rendering result of the direct illumination, to extract an intermediate rendering result that meets a requirement of the status of the feature resource of each client end and the camera posture of each client end, function as the feature stream of each client end.

For example, the direct illumination feature rendered by the feature component 201 is rendered based on an overall changed game scene, and the game scene is a three-dimensional scene. However, fields of view (for example, camera postures) of client ends may be different. In this way, a game picture of the game scene displayed on each client end needs to be the game picture of the game scene in the field of view. Therefore, the feature component 201 may extract, from the cached intermediate rendering result of the direct illumination, an intermediate rendering result that matches the camera posture of the client end 100, to subsequently obtain, through rendering, a game picture that is of the changed game scene and that meets the field of view of the client end 100. For example, the extracted intermediate rendering result does not relate to feature effect of an invalid region in which line of sight of the user of the client end is blocked. Specific effect may vary based on logic set by the game developer. This is not limited herein.

It should be understood that the extraction control information carried by each client end in the frame status is not limited to a camera posture, and may alternatively be a view cone, a reflection region, or the like.

The status of the feature resource uploaded by the client end 100 may include resolution of an intermediate rendering result of direct illumination. The intermediate rendering result of the direct illumination feature obtained by the feature component 201 through rendering has high resolution. In this case, the feature component 201 may continue to perform, based on the resolution required by the client end 100, subsampled processing on the intermediate rendering result that matches the camera posture of the client end 100, to obtain an intermediate rendering result that meets the resolution required by the client end 100.

In this way, the feature component 201 may extract, through the cache, an irradiance map (represented by a feature stream in FIG. 5A and FIG. 5B) that conforms to the field of view of the client end 100 and the network quality (represented by the resolution of the intermediate rendering result herein).

In this embodiment, the service end 200 may perform, by using a shared computing resource, unified rendering on a feature that is requested by a plurality of client ends for rendering, to save computing resources, and write the rendered intermediate rendering result into the shared cache, and extract, from the cache based on field of view information of different client ends, an intermediate rendering result that meets a field of view of the client end, for example, make the extracted intermediate rendering result not relate to feature effect of an invalid region in which line of sight of a user of the client end is blocked, and resolution of the extracted intermediate rendering result also meets a resolution requirement of the client end. In this way, quality of the extracted intermediate rendering result can meet a current network status of the client end.

A principle of extracting, by the feature component 201, the intermediate rendering result of the direct illumination from the cache based on a requirement of the client end 101 is similar to a principle of extracting, by the client end 100, the irradiance map that meets the field of view and the resolution of the client end 100. Details are not described herein again.

Finally, as shown in FIG. 5A and FIG. 5B, the feature component 201 (for example, the encoding module 102b shown in FIG. 3A and FIG. 3B) may compress and encode, based on a status of a feature resource of each client end (for example, a compression rate), the feature stream that is of each client end and that is extracted from the cache, to obtain a bitstream of the direct illumination feature that meets a requirement of client end 100 and a bitstream of the direct illumination feature that meets a requirement of client end 101.

Similarly, the feature component 202 may output and obtain a bitstream of the reflected illumination feature that meets a requirement of client end 100 and a bitstream of the reflected illumination feature that meets a requirement of client end 101.

Similarly, the feature component 203 may output and obtain a bitstream of the shadow feature of the client end 100.

In some embodiments, a feature component (for example, the encoding module 102b shown in FIG.

3A and FIG. 3B) in the service end 200 may compress a feature stream of each feature according to an encoding algorithm that matches the feature based on a data feature of a feature stream of each feature. For example, spherical harmonic Gaussian encoding may be used for an irradiance map, a motion vector-based encoding manner may be used for quasi-static content, and region of interest (Region of Interest, ROI) encoding may be used for specular reflection, to reduce the network bandwidth occupied by the transmission of the bitstreams of the feature.

In another embodiment, the intermediate rendering result of the corresponding feature may be extracted based on the status of the feature resource of the client end or the camera posture of the client end. A principle is similar, and details are not described herein again.

Refer back to FIG. 3A and FIG. 3B. In this embodiment, the rendering module 101b in the service end 200 may be controlled by the collaboration module 103b to adjust computing processing processes of different rendering features based on control information carried in a frame status, and drive the rendering pipeline module 107b to render a feature of a changed game scene. The rendering module 101b may cache an intermediate rendering result obtained after the rendering pipeline module 107b completes rendering, and extract the cached intermediate rendering result based on a requirement of the client end 100, to obtain a feature stream that meets the requirement of the client end 100. Then, the feature stream is encoded via the encoding module 102b, and a bitstream of an encoded feature is returned to the client end 100 via the transmission module 104b.

In this embodiment, based on a game scene, high computing power is required to render an intermediate rendering result of a feature. In this application, a process of rendering the intermediate rendering result is configured in the development state in the rendering module 101b and the game pipeline 105b in the service end 200 shown in FIG. 3A and FIG. 3B. In the runtime state, computation of the special effect of ray tracing may be transferred from the mobile terminal to the cloud, so that a mobile terminal with low computing power can also run a game with the special effect of ray tracing.

S105: The service end 200 sends a corresponding intermediate rendering result to the client end 100 based on the control information.

In the embodiment in FIG. 5A and FIG. 5B, the intermediate rendering result in S105 may be an encoded bitstream of a corresponding feature, and the bitstream may be a data stream formed by intermediate rendering results that are compressed based on a compression rate required by the client end 100 in the control information.

In addition, as shown in FIG. 5A and FIG. 5B, the service end 200 may perform, based on a feature status of each client end that is carried in the frame statuses respectively uploaded by the client end 100 and the client end 101, distribution control on the bitstream of the feature sent to each client end.

As described above, the client end 100 requests to enable all of the foregoing three features, and the client end 101 enables only the direct illumination feature and the reflected illumination feature that respectively correspond to the feature component 201 and the feature component 202. In this case, the service end 200 may transmit, to the client end 100 over the network, all bitstreams of the foregoing three features that are requested by the client end 100 and that meet a requirement of the client end 100.

In addition, the service end may transmit, to the client end 101 over the network, a bitstream of the direct illumination feature and a bitstream of the reflected illumination feature that meet a requirement of client end 101, without distributing a bitstream of the shadow feature to the client end 101.

In some embodiments, bitstreams that are of a plurality of features and that are distributed by the service end 200 to a same client end (for example, the client end 100) may be distributed to the client end 100 in a parallel manner shown in FIG. 5A and FIG. 5B, or may be distributed to the client end 100 in a serial manner. This is not limited herein.

In addition, when the service end 200 distributes the bitstreams of features required by a plurality of client ends to the plurality of client ends, the service end 200 may send the bitstreams required by the plurality of client ends to the plurality of client ends in parallel, to improve rendering efficiency of the plurality of client ends for a game picture with features, and reduce a delay and frame freezing of the game.

In an embodiment, the service end 200 may establish a network transmission channel for each client end via the transmission module 104b shown in FIG. 3A and FIG. 3B, and transmit a bitstream of a feature of each client end and related stream information to each client end.

S106: The client end 100 renders a corresponding feature on the game scene based on the intermediate rendering result, to obtain a target rendering result of the feature on the game scene.

As shown in FIG. 3A and FIG. 3B, the client end 100 may receive, from the service end 200 via the transmission module 104a, a bitstream (optionally further including stream information) having three features, and the transmission module 104a may obtain a data format based on the stream information. In this way, the decoding module 102a is invoked to decode the bitstream of the corresponding feature according to a decoding algorithm that matches the data format, to obtain feature streams of the three features.

In some embodiments, the decoding module 102a may invoke hardware decoding based on a specific hardware feature of the mobile terminal, to improve decoding efficiency of a bitstream of the feature.

In addition, as shown in FIG. 3A and FIG. 3B, the collaboration module 103a may receive current network status information from the transmission module 104a, and may update a frame status of a next frame based on the network status information.

In addition, as shown in FIG. 3A and FIG. 3B, the collaboration module 103a in the client end 100 may control the rendering module 101a to inject (for example, replace the intermediate rendering result) the feature streams (specifically, intermediate rendering results of the features) of the foregoing three features synchronized by the service end 200 into the basic rendering pipeline of the rendering pipeline module 105a. In this way, when the rendering scene (the game scene herein) is updated, the rendering effect of the feature in the game picture on the terminal side is updated and enhanced; and when the game scene is updated due to an operation of the user on the game, the special effect of ray tracing may also be updated in the output game picture.

In a possible implementation, a process in which the client end 100 processes the bitstreams of the foregoing three features received from the service end 200 is described with reference to FIG. 5A and FIG. 5B.

As shown in FIG. 5A and FIG. 5B, the client end 100 may receive bitstreams of three features from the service end 200. Specifically, a bitstream of a direct illumination feature, a bitstream of a reflected illumination feature, and a bitstream of a shadow feature are respectively input to the feature component 301, the feature component 302, and the feature component 303 of the client end 100.

Processing processes of the three feature components are similar. An example in which the feature component 301 processes a bitstream of a direct illumination feature is used for description.

The feature component 301 may decode the bitstream of the direct illumination feature, to obtain a feature stream of the direct illumination (herein, the feature stream is an irradiance map). Then, the feature component 301 may perform conversion processing on the feature stream, to obtain a converted intermediate rendering result (also referred to as a rendering resource) that is compatible with a basic pipeline in the rendering pipeline module 105a.

For example, the feature component 301 may convert the irradiance map into a rendering resource such as a spherical harmonic Gaussian coefficient to be compatible with the basic pipeline within the rendering pipeline module 105a. For another example, the feature component 302 may convert a feature stream (for example, a reflection map) of the reflected illumination into a cube map to be compatible with the basic pipeline within the rendering pipeline module 105a.

Finally, the feature component 301 may inject the converted intermediate rendering result into the rendering pipeline module 105a.

As shown in FIG. 5A and FIG. 5B, the feature component 301, the feature component 302, and the feature component 303 may separately inject converted intermediate rendering results of the three features into the rendering pipeline module 105a.

For example, the feature component 301 may replace a preset spherical harmonic Gaussian coefficient in the rendering pipeline module 105a with a spherical harmonic Gaussian coefficient obtained through conversion. For another example, the feature component 302 may replace a preset cube map in the rendering pipeline module 105a with a cube map obtained through conversion.

The rendering pipeline module 105a may render the foregoing three features based on a changed game scene, and replace preset intermediate rendering results of the three features with respective converted intermediate rendering results of the foregoing three features from the cloud, so that target rendering results of the foregoing three features are obtained on the game scene, and the rendering pipeline module 105a performs superposition and post-processing on the target rendering results of the three features, to obtain a game picture that can be displayed on a screen.

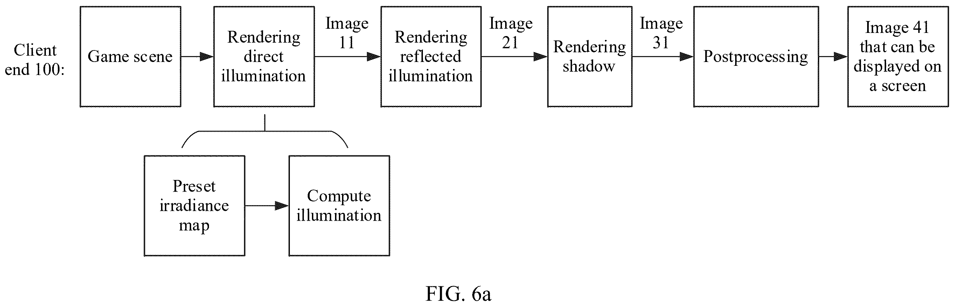

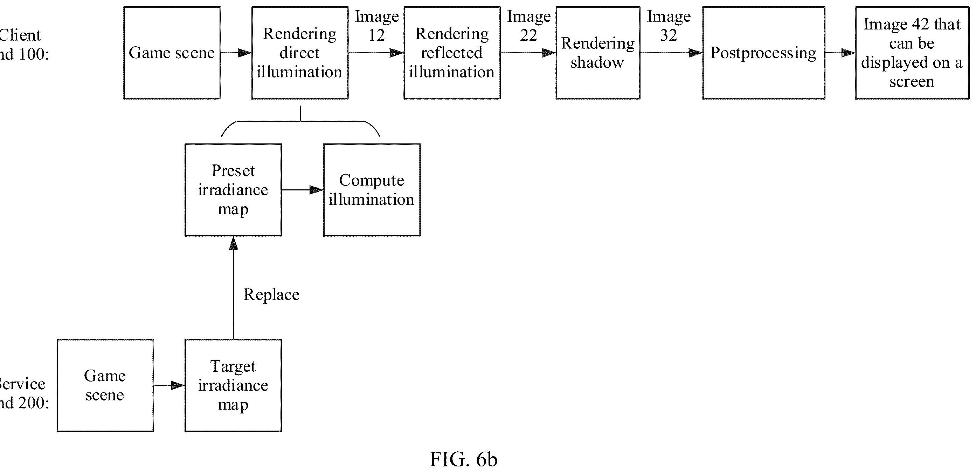

For ease of understanding, a feature injection process is understood based on the procedures shown in FIG. 6a and FIG. 6b.

FIG. 6a is a processing process in which a client end 100 renders an image that can be displayed on a screen and that has three features: direct illumination, reflected illumination, and shadow in a related technology.

FIG. 6b is a processing process in which a client end 100 collaborates with a service end 200 to render an image that can be displayed on a screen and that has three features: direct illumination, reflected illumination, and shadow according to this application.

As shown in FIG. 6a, when the client end 100 detects that the game scene changes, the client end 100 may start a rendering procedure for three features: direct illumination, reflected illumination, and shadow.

For example, the client end 100 sequentially renders the direct illumination feature, the reflected illumination feature, and the shadow feature on a game scene.

The client end 100 may render a direct illumination feature on the game scene based on a rendering procedure of direct illumination, to obtain an image 11 with direct illumination. Then, the client end 100 may render the reflected illumination on the image 11 based on a rendering procedure of the reflected illumination, to obtain an image 21 with both direct illumination and reflected illumination. Then, the client end 100 may render a shadow on the image 21 based on a 1 shadow rendering procedure, to obtain an image 31 with direct illumination, reflected illumination, and a shadow. Finally, the client end 100 may perform post-processing (for example, tone mapping, which is not limited) on the image 31, to obtain an image 41 that can be displayed on a screen.

It should be understood that a rendering sequence of the client end 100 for each feature may vary based on a difference between games. The rendering sequence herein is merely an example, and is not intended to limit this application.

A principle of a process in which the client end 100 renders each feature is similar. Herein, a process of rendering direct illumination is used as an example for description.

As shown in FIG. 6a, because high computing power is required to obtain the irradiance map through rendering, and computing power of the client end 100 is low, the client end 100 is configured with a preset irradiance map (an intermediate rendering result of the direct illumination feature) in the development state, the client end 100 may compute illumination on the preset irradiance map to obtain the image 11, to implement a rendering procedure of direct illumination.

In the process in FIG. 6a, an intermediate rendering result of a corresponding feature used in a rendering procedure of each feature is a preset intermediate rendering result (for example, a preset irradiance map). In this case, when a game scene changes, any one of the direct illumination, the reflected illumination, and the shadow in the game picture does not change. In other words, in a running process of the client end 100, feature effect of each frame of game picture is the same, and does not change.

However, in the technical solution of this application shown in FIG. 6b, as shown in FIG. 6b, the client end 100 may render a direct illumination feature on the game scene based on a direct illumination rendering procedure configured in the development state, to obtain an image 12 with direct illumination. Then, the client end 100 may render the reflected illumination on the image 12 based on a rendering procedure of the reflected illumination configured in the development state, to obtain an image 22 with both the direct illumination and the reflected illumination. Then, the client end 100 may render a shadow on the image 22 based on a shadow rendering procedure configured in the development state, to obtain an image 32 with direct illumination, reflected illumination, and a shadow. Finally, the client end 100 may perform post-processing on the image 32, to obtain an image 42 (for example, a game picture shown in FIG. 3A, FIG. 3B, FIG. 5A, and FIG. 5B) that can be displayed on a screen.

A principle of a process in which the client end 100 renders each feature is similar. Herein, a process of rendering direct illumination is used as an example for description.

As shown in FIG. 6b, because high computing power is required to obtain the irradiance map through rendering, the service end 200 may perform direct illumination rendering on the game scene, to obtain an intermediate rendering result of direct illumination. Herein, the intermediate rendering result is a target irradiance map. Then, the client end 100 may replace a rendering resource (which is a preset irradiance map herein) used in the rendering procedure of direct illumination with the target irradiance map obtained by the service end 200 through rendering. Then, the client end 100 computes illumination for the target irradiance map, to complete injection and fusion of the target irradiance map, to obtain an image 12. The image 12 may be an example of the target rendering result in S106. Similarly, a rendering resource used in the reflected illumination rendering procedure shown in FIG. 6b is also replaced with an intermediate rendering result of the reflected illumination feature generated by the service end 200. In addition, a rendering resource used in the shadow rendering procedure shown in FIG. 6b is also replaced with an intermediate rendering result of a shadow feature generated by the service end 200.

In this way, compared with FIG. 6a, in the solution shown in FIG. 6b of this application, when the game scene changes, the game picture displayed by the client end 100 may implement real-time update of three features: direct illumination, reflected illumination, and shadow in the changed game scene, without always maintaining same direct illumination special effect, same reflected illumination special effect, and same shadow special effect. In addition, visual effect that is of the foregoing three features and that is updated in real time can match requirements of the client end 100, such as a current network status of the client end 100, a changed game scene, and a user field of view of the client end 100.

In the development state, rendering procedures of the foregoing three features may be configured for the game pipeline module 105a in the client end 100, so that the client end 100 can support injection of the foregoing three features.

In conclusion, the client end 100 (for example, a game executable program installed on a mobile terminal) in this application may be directly controlled by a user. A complete game logic is provided, and a game scene change may be generated. The collaboration module 103a synchronizes a rendering requirement of the client end 100 for a feature to the cloud, to drive the service end 200 deployed on the cloud to render the changed game scene for the feature that meets the rendering requirement. In addition, the client end 100 has only a basic rendering capability (for example, a capability of computing illumination shown in FIG. 6b, but does not have a capability of obtaining an intermediate rendering result of a feature through computation), and the rendering module 101a in the client end 100 may enhance, based on the intermediate rendering result of the feature delivered by the cloud, effect of each feature rendered by the client end 100, and synthesize a game picture whose rendering result meets a requirement of the client end 100.

The service end 200 (for example, a game executable program deployed on a cloud-side device) in this application has only basic game logic (for example, logic of an intermediate rendering result of a computing feature). The service end 200 may be controlled by the collaboration module 103b, and render the feature only when a game scene is updated (the game scene is not updated, and the foregoing feature does not need to be rendered). In addition, during feature rendering, rendering may be performed based on a rendering requirement of the client end 100 synchronized by the collaboration module 103b, to obtain an intermediate rendering result of a feature that meets the requirement of the client end 100. In addition, compared with the conventional technology in which a light feature of each frame of game picture is fixed, in this application, when a game scene changes, a cloud can adjust a light feature in a changed game scene in real time. The light feature has a complete rendering capability of the intermediate rendering result, and includes a ray tracing rendering feature, a high-quality rendering resource, or the like. The service end 200 delivers, to the client end 100, the intermediate rendering result that is of the feature and that is obtained by the rendering module 101b through computation, to inject the feature, thereby implementing transfer of computing power for computing the intermediate rendering result from the mobile terminal to the cloud.

In the foregoing embodiment, for example, the client end 100 needs to update the feature in the game picture when the client end 100 detects that the game scene changes. In another possible implementation, when the client end 100 detects that the game scene does not change but only the camera posture changes, the client end 100 may synchronize the changed camera posture to the service end 200 via the collaboration module 103a and the transmission module 104a. The service end 200 may cache intermediate rendering results of various features rendered by a previous frame of game picture.

In this embodiment, different from the embodiment in which the game scene changes, the service end 200 does not need to recompute the feature, and the service end 200 may extract, based on the camera posture synchronized by the client end 100, an intermediate rendering result that conforms to the field of view of the camera posture from the cached intermediate rendering result that is related to the previous frame of game picture and that is computed last time, and deliver the intermediate rendering result to the client end 100, to update the game picture of the client end 100 to a game picture in a changed field of view.

In this way, when the game scene of the client end 100 does not change but only the field of view of the user changes, the client end 100 may still update, in a terminal-cloud collaboration manner, the game picture to a game picture within a changed field of view, and a specific implementation process is mostly the same as that in the foregoing embodiment in which the game scene changes. A difference lies in that the service end 200 does not need to recompute a feature (for example, an operation of feature rendering of each feature component in the service end 200 shown in FIG. 5A and FIG. 5B). The cached intermediate rendering result related to the previous frame of game picture only needs to be extracted based on the changed field of view of the user. Optionally, the service end 200 may perform processing such as compression on the extracted intermediate rendering result based on an encoding requirement required by the client end 100. The update of the game picture does not cause a change of a feature type in the game picture, but fields of view of various features in the game picture change.

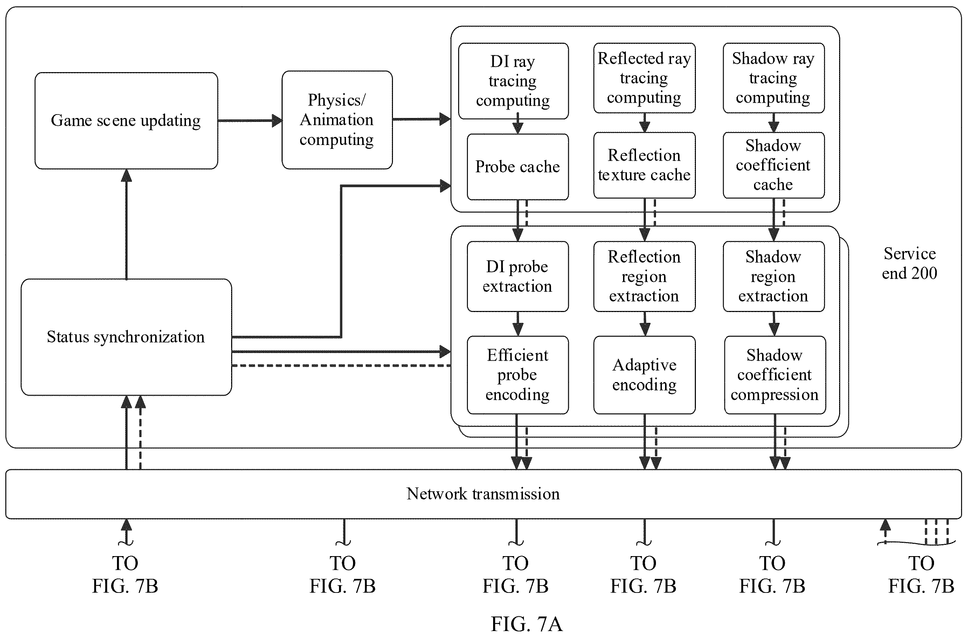

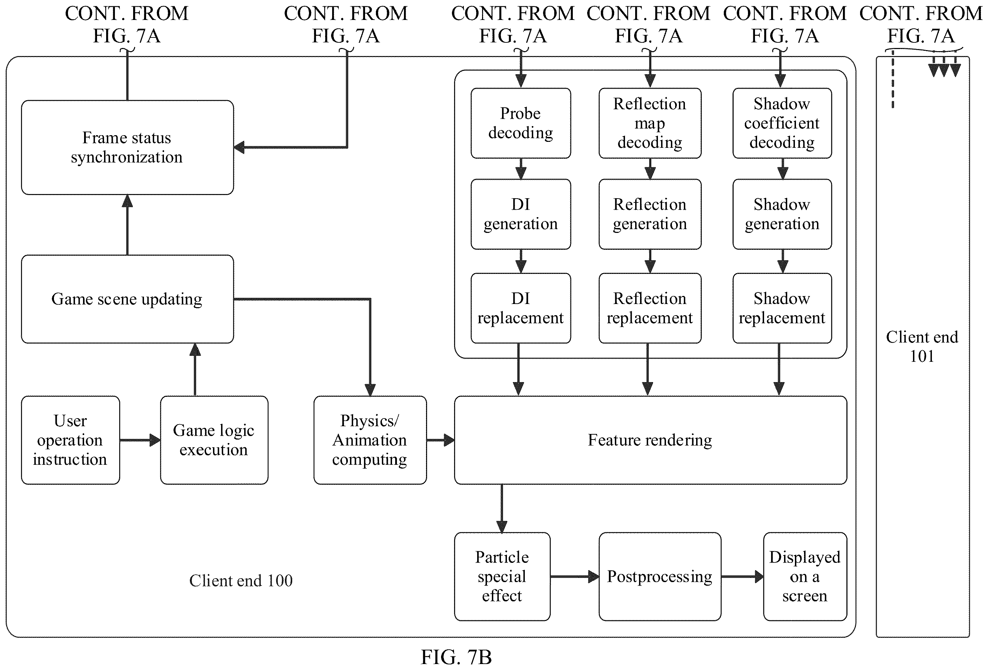

The following describes a collaboration process between the client end 100 and the service end 200 in this application with reference to FIG. 7A and FIG. 7B by using an example in which rendering features are direct illumination, reflected illumination, and shadow.

Most content of the processing process in FIG. 7A and FIG. 7B is the same as that of the processing processes in FIG. 3A to FIG. 5B and FIG. 6b described in the foregoing embodiments, and details are not described herein. This example is intended to describe in detail a computing process, an extraction process, and a compression process of the intermediate rendering results of the foregoing three features by the service end 200, in addition, the client end 100 describes a process of decompressing the intermediate rendering result and a process of feature injection. In FIG. 7A and FIG. 7B, a single client end is used as an example for description. When a game scene is updated and there are a plurality of client ends, a principle is similar. For details, refer to the foregoing descriptions. Details are not described herein.

Feature 1: direct illumination: In rendering, direct illumination means illumination effect obtained when light emitted by a light source directly reaches a surface of an object without being bounced. In a game application, considering computation complexity and a quantity of light sources, direct dynamic illumination effect of particle light sources (ranging from a hundreds level to a thousands level) is usually not considered. Especially on a running platform of a mobile phone, real-time illumination computation of the particle light sources is unrealistic due to a large quantity of particles. However, particle effect is often critical to expressiveness of games. In this case, a direct illumination part of the particles may be offloaded to the cloud, to implement illumination effect of a large quantity of particles, thereby improving a rendering atmosphere of the game.

Feature 2: planar reflection (specular reflection or direct reflection): In rendering, reflection describes a phenomenon that light waves are transmitted back when the light waves arrive at a medium interface. In the performance of smooth surface objects (metal, smooth ground), water surface (lake surface, ground water) and other materials, incorporating reflection can greatly improve the picture effect. When a reflective surface is a plane, a camera obtained by mirroring a rendering camera along the reflective plane may be rendered once, to obtain reflected content. However, if real-time update is required, one full-scenario drawing call is required, which increases a rendering load on a terminal side. In this case, the computation is offloaded to a cloud to assist the terminal side in rendering the reflection effect.

Feature 3: soft shadow: In rendering, a shadow describes effect that light is blocked by an object and cannot illuminate a surface of the object. When the light source is a surface light source, the formed shadow is not black or white, but has a gradient transition region, which is referred to as a half shadow or a soft shadow. To implement soft shadow effect, a hard shadow is usually transformed for approximation. However, this implementation usually has a defect. A more stable and real soft shadow needs to be implemented according to a ray tracing algorithm. However, computing power and power consumption required by the ray tracing algorithm are unaffordable for a current mobile terminal. Therefore, it is considered that computing of the ray tracing algorithm is offloaded to the cloud to assist a terminal side in implementing the soft shadow rendering effect.

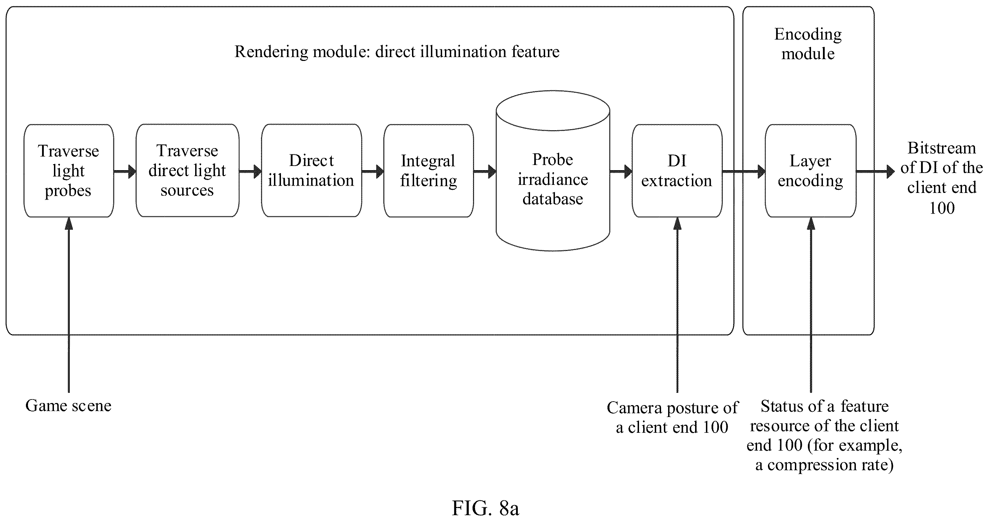

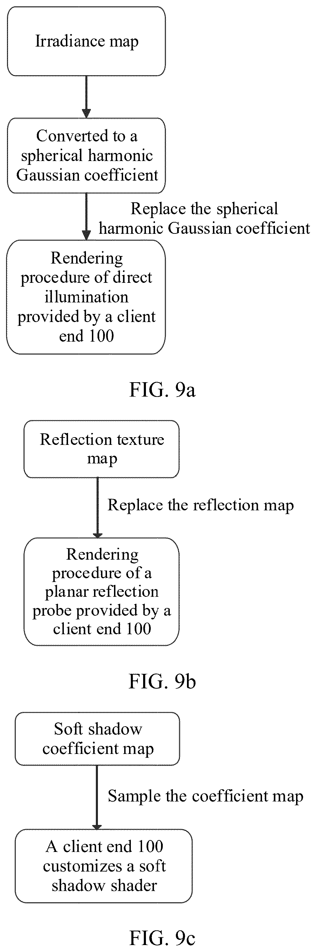

In conclusion, in this embodiment, terminal-cloud collaborative rendering is constructed for three rendering features: direct illumination (Direct Illumination, DI), planar reflection, and shadow. A running design of the terminal-cloud collaborative rendering is shown in FIG. 7A and FIG. 7B. Specific running logic is described with reference to FIG. 8a to FIG. 8c and FIG. 9a to FIG. 9c.

Optionally, in a development state, the apparatus 300 used as a plug-in in this application shown in FIG. 1 may provide different user interfaces for the foregoing plurality of features (DI, planar reflection, and shadow), so that a developer configures a rendering module, an encoding module, a transmission module, a collaboration module, and the like of the service end 200, for example, resolution of an intermediate rendering result (for example, a map) obtained through rendering by the rendering module may be configured.

As shown in FIG. 7A and FIG. 7B, the client end 100 executes game logic based on a user operation instruction, so that the game scene is updated.

When the game scene is updated, the client end 100 may package a frame status and transmit the frame status to the service end 200 over a network.

In addition, when the game scene is updated, the client end 100 may further perform physics or animation computation, and perform feature rendering based on intermediate rendering results of the foregoing three features after replacement, to obtain an image having the foregoing three features.

After the service end 200 synchronizes the frame status from the client end 100, the service end 200 may perform computation, caching, extraction, and encoding processes of direct illumination (DI), reflected illumination, and shadow based on the frame status.

The following describes a process of direct illumination computation, caching, extraction, and encoding.

FIG. 8a shows a procedure in which a rendering module and an encoding module of the service end 200 render a direct illumination feature on a changed game scene.

As shown in FIG. 8a, for computation of direct illumination, the rendering module may determine a light source and a light probe based on a game scene. The light probe is a point (or a ball) in three-dimensional space, and a light source of direct illumination may illuminate the balls.

First, the rendering module may traverse light probes on the game scene.

Then, for each light probe, the rendering module may traverse a list of direct light sources that need to be computed.

Then, the rendering module may compute direct illumination of the list of the direct light sources that are on each light probe, to obtain a result of direct illumination of each direct light source on all light probes.

In consideration of radiation distribution of each direct light source to the light probe after the direct light source is attenuated at a specific distance, for each light probe, integral filtering may be performed based on results of direct illumination corresponding to all direct light sources, to obtain an irradiance map of the light probe.

Then, the rendering module may store the irradiance map of each light probe in a probe irradiance database.

The irradiance of the light probe may be cached through a spatial sparse structure. The irradiance map of the light probe can store the irradiance of the point in each direction. The irradiance 1 can be calculated using formula 1:

$$I = \int_{\Omega} L(\boldsymbol{x}_\mathrm{i}, \boldsymbol{w}_\mathrm{i})(\boldsymbol{w}_\mathrm{i} \cdot \boldsymbol{n})\mathrm{d}\boldsymbol{w}_\mathrm{i}, \text{ formula 1.}$$

In the formula 1, x, w, n,.o. represent a position, a unit solid angle direction, a surface normal, and a spherical integral domain, respectively; L is a radiation rate, and is used to describe radiation intensity of a position x along a unit solid angle direction w, unit time, and unit area, that is, color and brightness perceived by human eyes, and $L_e$ is specifically the spontaneous light radiation rate; and f($x_o$, $w_o$, $x_i$, $w_i$) is a bidirectional distribution function, and is used to describe how a light ray acts with a medium, that is, a direct illumination result from a light source to a probe is considered for a contribution of an incident light ray ($x_i$, $w_i$) to an emergent light ray ($x_o$, $w_o$).

As shown in FIG. 8a, the rendering module may select, based on a camera posture (a relationship between a position and a field of view) of each client end, where the client end 100 is used as an example herein, to select the irradiance map of the light probe within the corresponding field of view of the client end from the probe irradiance database (which can be referred to as an effective irradiance map of a light probe). In this way, an unnecessary irradiance map of the light probe is removed, thereby reducing occupation of data transmission bandwidth.

In addition, the rendering module may combine the effective irradiance maps of the light probes to obtain a complete irradiance map, and send the complete irradiance map to the encoding module.

Optionally, when the rendering module of the service end 200 performs DI extraction, the rendering module of the service end 200 may further perform subsampled processing on the complete irradiance map based on a resolution requirement for the irradiance map in the frame status uploaded by the client end 100, to extract an irradiance map that meets a resolution requirement for the irradiance map.

Finally, the encoding module may compress and encode the extracted irradiance map based on a requirement (for example, a compression rate in a status of a feature resource) for a bitstream in a frame status uploaded by the client end 100 and based on a mode of the video stream and a compression rate indicated by the client end 100, to adjust the bit rate of the bitstream, to obtain the bitstream of the DI of the client end 100, and to deliver the bitstream to the client end 100.

As shown in FIG. 7A and FIG. 7B, after receiving the bitstream of DI, the client end 100 may decode the bitstream to obtain the complete irradiance map, and replace the irradiance map.

Specifically, FIG. 9a shows an injection process of a direct illumination feature.

For direct illumination, considering that final shading computation is performed directly based on the irradiance map, there are some problems in sampling and compatibility. In this case, the rendering module of the client end 100 may first convert the irradiance map into an expression of spherical harmonic Gaussian (for example, a spherical harmonic Gaussian coefficient). Then, the client end 100 may replace the preset spherical harmonic Gaussian coefficient in the direct illumination rendering procedure of the client end 100 with the foregoing converted spherical harmonic Gaussian coefficient from the service end 200, to replace the intermediate rendering result of direct illumination. A specific principle is similar to the principle described in the embodiment in FIG. 6b. Details are not described herein. In this way, the intermediate rendering result of direct illumination delivered by the cloud is injected.

In this way, when the game scene changes, special effect of direct illumination in the game picture displayed by the client end 100 may also change.

The following describes a process of reflected illumination computation, caching, extraction, and encoding.

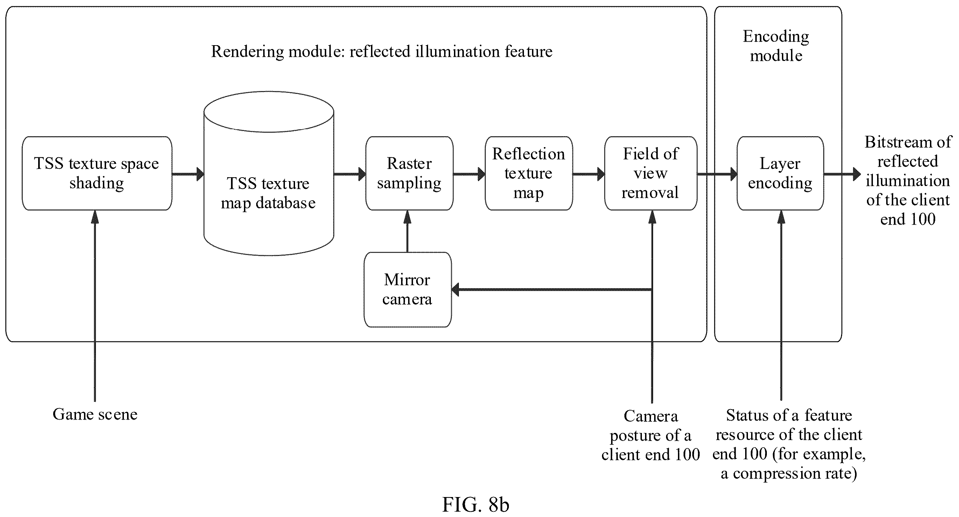

FIG. 8b shows a procedure in which a rendering module and an encoding module of the service end 200 render a reflected illumination feature on a changed game scene.

As shown in FIG. 8b, for planar reflection computation, first, the rendering module may perform texture expansion on an object that can be reflected on a game scene, and parameterize the object to a texture space shading (Texture Space Shading, TSS) map. Then, after the game scene is updated, the rendering module may perform shading computation in the TTS texture space, and store the shading computation in a database of a TSS texture map. Then, the rendering module obtains a mirror camera through computation based on a camera position and a field of view of each client end, and then performs raster sampling from the database of the TSS texture map based on the mirror camera, to obtain a rendering result of a reflective camera (herein, a reflection texture map). Then, the rendering module may remove an invalid region from the reflection texture map based on the field of view information (for example, a camera posture) of each client end. For example, content in the non-reflection region is removed, or content that can be efficiently computed on the mobile terminal side, for example, skybox content, is removed, to reduce bandwidth as much as possible. A reflection texture map obtained through removing is sent from the rendering module to the encoding module for encoding and is delivered to each client end. For example, the encoding module may compress and encode the reflection texture map based on a requirement (for example, a compression rate in a state of a feature resource) for a bitstream in a frame status uploaded by the client end 100 and based on a mode of the video stream and a compression rate indicated by the client end 100, to obtain a bitstream of reflected illumination required by the client end 100, and to deliver the bitstream to the client end 100.

As shown in FIG. 7A and FIG. 7B, after the client end 100 receives the bitstream of the reflected illumination, the client end 100 may decode the bitstream to obtain the reflection texture map, and replace the reflection texture map.

Specifically, FIG. 9b shows an injection process of a reflected illumination feature.

For the reflection illumination, considering that a common planar reflection probe is widely used, only a rendering procedure for computing the planar reflection probe needs to be preconfigured in the game pipeline on the mobile terminal side, and the client end 100 may replace a map resource of the reflection probe preset in the rendering procedure of the client end 100 with the reflection texture map delivered by the service end 200 on the cloud. In this way, the planar reflection feature can take effect on the rendering result of the client end 100 in a compatible manner, to implement dynamic planar reflection in the game picture.

In this way, when the game scene changes, special effect of planar reflection in the game picture displayed by the client end 100 may also change.

The following describes a process of shadow computation, caching, extraction, and encoding.

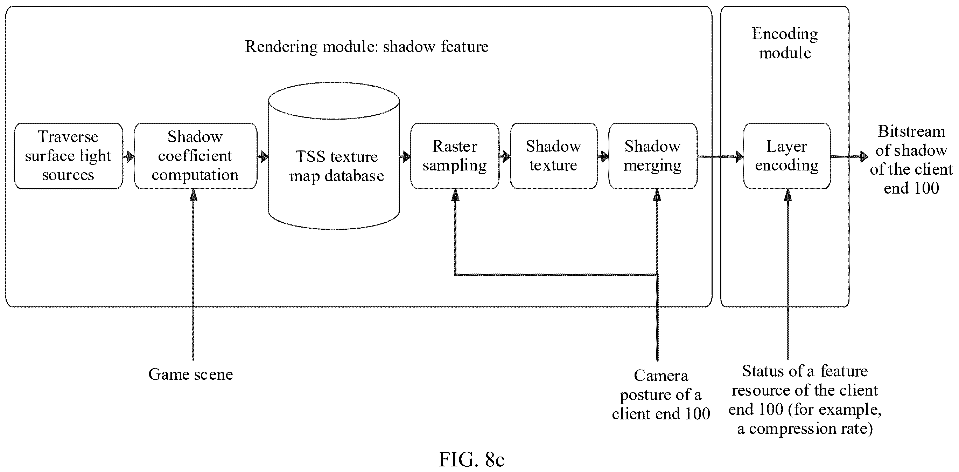

FIG. 8c shows a procedure in which a rendering module and an encoding module of the service end 200 render a shadow feature on a changed game scene.

As shown in FIG. 8c, for computation of soft shadow, texture expansion is first performed on an object that can be reflected in a scene, and the object is parameterized to a TSS texture map. After the game scene is updated, the rendering module may determine a surface light source based on an updated game scene. Then, the rendering module traverses the surface light source, and computes, in texture space, a shadow coefficient (between 0 and 1) caused by each surface light source, and the shadow system may be defined as a ratio of shading results (between 0 and 1) considering occlusions to shading results (between 0 and 1) not considering occlusions; after computing the shading coefficients, the shading coefficients may be stored as shading textures in a database of the TSS texture map. Then, raster sampling is performed in the database of the TSS texture map based on a camera posture (position and field of view) of the client end, to obtain a shadow texture in a camera field of view of the corresponding client end. Considering that there may be a plurality of surface light sources (for example, there are four lights on the game scene), the shadow textures need to be combined. Because the shadow coefficient is a single channel, and there is a single layer for a single light source, when the rendering module combines shadow textures, the rendering module may first combine shadow layers based on a quantity of surface light sources, to obtain a commonly used four-channel layer. Then, the rendering module sends combined shadow texture to the encoding module. The encoding module may compress and encode the combined shadow texture based on a requirement (for example, a compression rate in a state of a feature resource) for a bitstream in a frame status uploaded by each client end (for example, the client end 100) and based on a mode of the video stream and a compression rate indicated by the client end 100, to obtain a bitstream of a shadow feature required by the client end 100, and to deliver the bitstream to the client end 100.

As shown in FIG. 7A and FIG. 7B, after the client end 100 receives the bitstream of the shadow, the client end 100 may decode the bitstream of the shadow to obtain a shadow texture (specifically, a shadow coefficient, which is represented by a soft shadow coefficient map in FIG. 9c), and replace the shadow coefficient.

Specifically, FIG. 9c shows a process of injecting a shadow feature.

For soft shadow shading, because there is no corresponding module in the game engine in the shadow coefficient-based rendering method, in a development state, the apparatus 300 shown in FIG. 1 may be used in this application to extend functions of an existing game engine, to configure a shader (for example, a function) in the apparatus 300 into the game pipeline module of the client end 100 such that the client end 100 has a custom soft shadow shader based on a given shadow coefficient.

During shadow feature injection, after the client end 100 obtains the soft shadow coefficient map from the service end 200, the soft shadow shader in the client end 100 may sample the coefficient map from the soft shadow coefficient map, to obtain a corresponding shadow coefficient. Then, the client end 100 may obtain, based on the obtained shadow coefficient and a light computation result obtained by a client end 100 side without considering object blocking on the game scene, a shading result including soft shadow effect.

In this way, when the game scene changes, the game picture displayed by the client end 100 may have a shadow feature, and may change with an update of the game scene.

Still refer to FIG. 7A and FIG. 7B. After the client end 100 decodes, generates, and replaces the foregoing three features, the client end 100 may perform feature rendering by using an intermediate rendering result of a replaced feature in combination with physics/animation computation. Optionally, processing such as particle effect and post-processing may be further performed, to obtain the image that can be displayed on a screen.

In a possible implementation, the client end 100 and the service end 200 in this application may further support collaborative rendering of more features. The features may include but are not limited to indirect illumination, spherical reflection, and ambient occlusion (Ambient Occlusion, AO).

For the indirect illumination, a computing processing process of the indirect illumination feature by the service end 200 is similar to the computing processing process of the direct illumination feature shown in FIG. 8a.

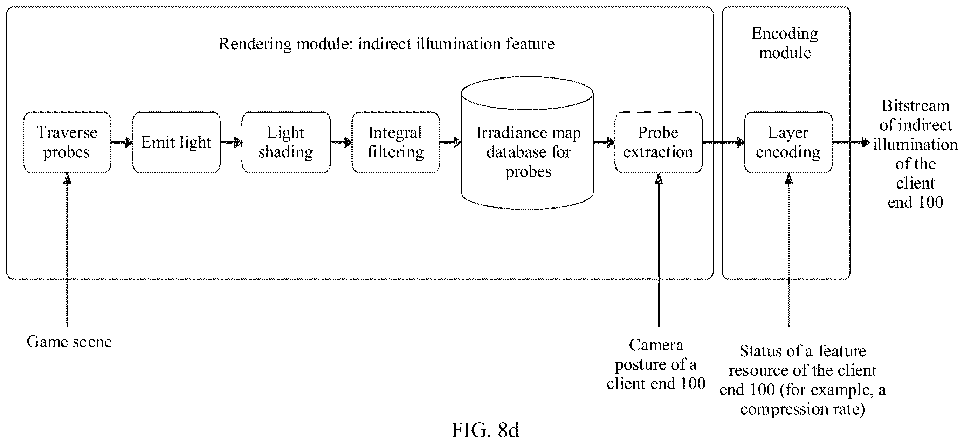

FIG. 8d shows a procedure in which a rendering module and an encoding module of the service end 200 render an indirect illumination feature on a changed game scene.

As shown in FIG. 8d, the rendering module may first traverse probes based on a game scene, emit light for each probe, then perform light shading to obtain the radiance of each probe, and then perform integral filtering on the radiance of each probe to obtain the irradiance map of each probe. Then, the rendering module may store the irradiance map of each probe in a probe irradiance database. Considering that a result of the indirect illumination may also be stored as the irradiance map, before the service end 200 delivers the intermediate rendering result (herein, the irradiance map) of the indirect illumination, the intermediate rendering result (irradiance map) of indirect illumination and the intermediate rendering result (irradiance map) of direct illumination can be superimposed and delivered. For principles of extracting and encoding an intermediate rendering result of indirect illumination, and principles of a process in which the client end 100 uses and injects the intermediate rendering result of the indirect illumination, refer to related descriptions of FIG. 8a and FIG. 9a of the direct illumination feature. Details are not described herein.

In this way, when the game scene changes, the game picture displayed by the client end 100 may have an indirect illumination feature, and may change with an update of the game scene.

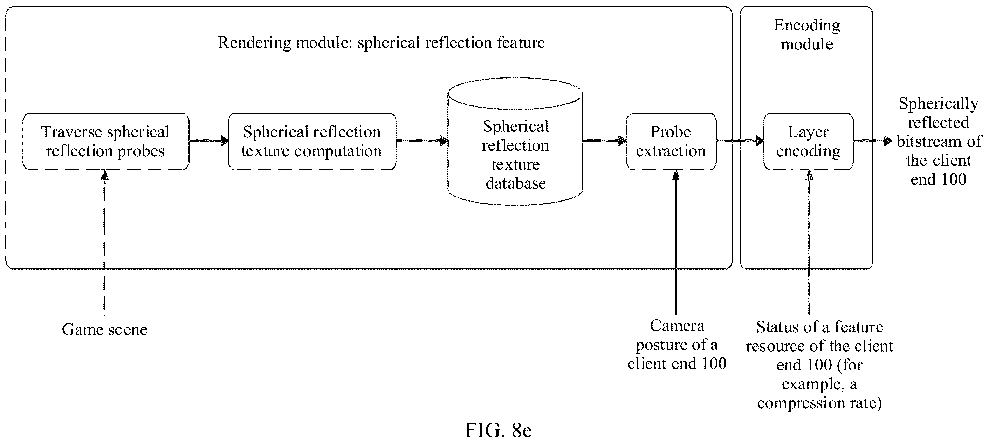

For spherical reflection, it is equivalent to a panoramic camera. FIG. 8e shows a procedure in which a rendering module and an encoding module of the service end 200 render a spherical reflection feature on a changed game scene.

As shown in FIG. 8e, the service end 200 may traverse the spherical reflection probe based on the game scene, and compute a spherical reflection texture for each spherical reflection probe. Then, the spherical reflection texture of each spherical reflection probe is stored in a database of the spherical reflection texture. Then, the service end 200 selects, based on a camera posture (a position and a field of view) of the client end 100, a spherical reflection texture that is of the spherical reflection probe and that meets the field of view of the client end 100. Then, the service end 200 combines all selected spherical reflection textures, and performs encoding via the encoding module based on a compression rate requirement of the client end 100 for the spherical reflection texture. Finally, the service end 200 delivers a compressed bitstream (for example, the spherical reflection texture) of the spherical reflection feature to the client end 100.

Similar to the processing processes in FIG. 9a to FIG. 9c, after the client end 100 obtains the spherical reflection texture of the spherical reflection feature from the service end 200, the client end 100 replaces the preset spherical reflection texture in the rendering procedure of the spherical reflection texture that is provided by the client end 100 with the spherical reflection texture delivered by the service end 200, to render the dynamic spherical reflection feature of the game picture in a compatible manner.

In this way, when the game scene changes, the game picture displayed by the client end 100 may have a spherical reflection feature, and may change with an update of the game scene.

The AO may be understood as a soft shadow of indirect illumination (for example, a shadow of a wall corner). Rendering of the AO feature may be understood as a special shadow coefficient. Therefore, for a computation procedure of the AO feature in the service end 200 in the cloud, refer to the soft shadow rendering computation procedure shown in FIG. 8c. In addition, the service end 200 may combine the intermediate rendering result of the AO and the intermediate rendering result row of the soft shadow, compress a combined result, and deliver a compressed intermediate rendering result to the client end 100.

After the client end 100 receives the bitstream of the intermediate rendering result of the AO, the client end 100 may decompress the bitstream, to extract a map of the AO from the multi-channel map. Then, the client end 100 may replace a preset AO texture map of the game engine with the extracted AO texture map, so that a dynamic AO feature of the game picture can be implemented in a compatible manner.

In this way, when the game scene changes, the game picture displayed by the client end 100 may have an AO feature, and may change with an update of the game scene.

In the foregoing embodiment in FIG. 7A and FIG. 7B, the service end 200 may be deployed on a server on the cloud. In this embodiment, considering that a plurality of users access a service on the cloud, a single server is under excessively high computing pressure, and easily cannot carry computing tasks of all client ends.

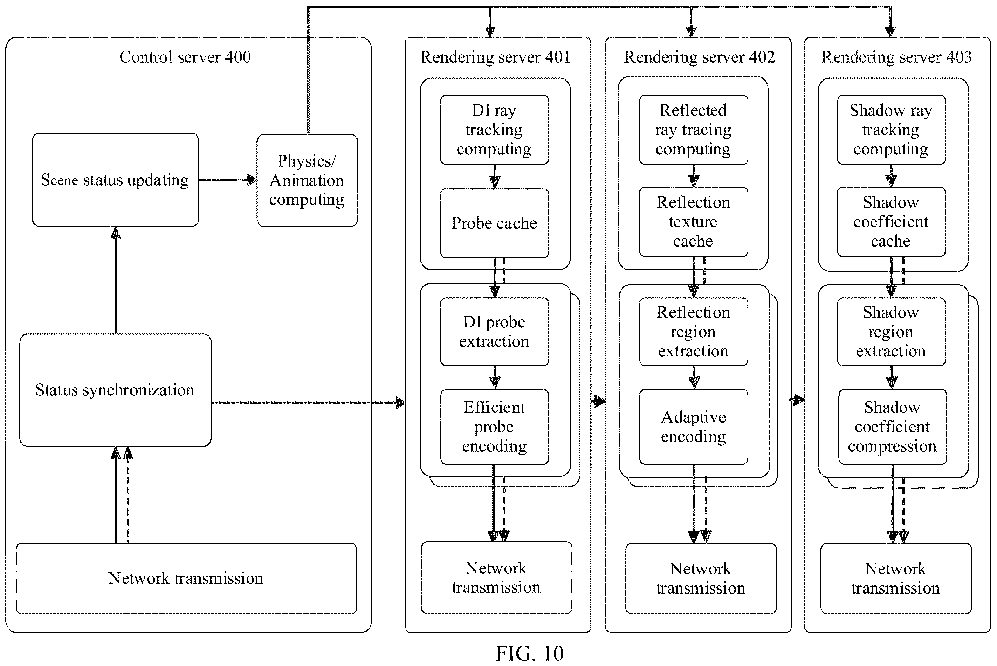

In this embodiment, different from FIG. 7A and FIG. 7B, as shown in FIG. 10, a computing task of each feature may be separately executed on the cloud by using independent graphics card hardware or independent server hardware, to improve rendering efficiency of feature rendering on the cloud side and the terminal side, and to reduce a rendering delay of a game picture with a ray tracing feature in a scenario of a large quantity of users.

As shown in FIG. 10, the cloud may include a control server 400 and a rendering server 401 to a rendering server 403.

The rendering server 401 may be configured to perform a rendering and compression procedure on a direct illumination feature, the rendering server 402 may be configured to perform a rendering and compression procedure on a planar reflection feature, and the rendering server 403 may be configured to perform a rendering and compression procedure on a shadow feature.

In addition, the control server 400 may be configured to perform frame status synchronization with each client end, and compute physics, an animation, or the like based on the synchronized frame status, to control the rendering server 401 to the rendering server 403 to separately perform rendering and compression processes of corresponding features.

A processing process of each server in FIG. 10 is basically the same as a processing process of the service end 200 in FIG. 7A and FIG. 7B. A difference lies only in that the four servers in FIG. 10 perform a part of respective content of the four servers in a working procedure of the service end 200 in FIG. 7A and FIG. 7B, to implement an overall function of the service end 200 shown in FIG. 7A and FIG. 7B.

As shown in FIG. 10, the control server 400 and rendering servers, and servers may be connected and communicate with each other over a network. In this way, the control server 400 may separately control each rendering server to perform feature rendering, and the rendering servers may also communicate with each other, to improve feature rendering efficiency.

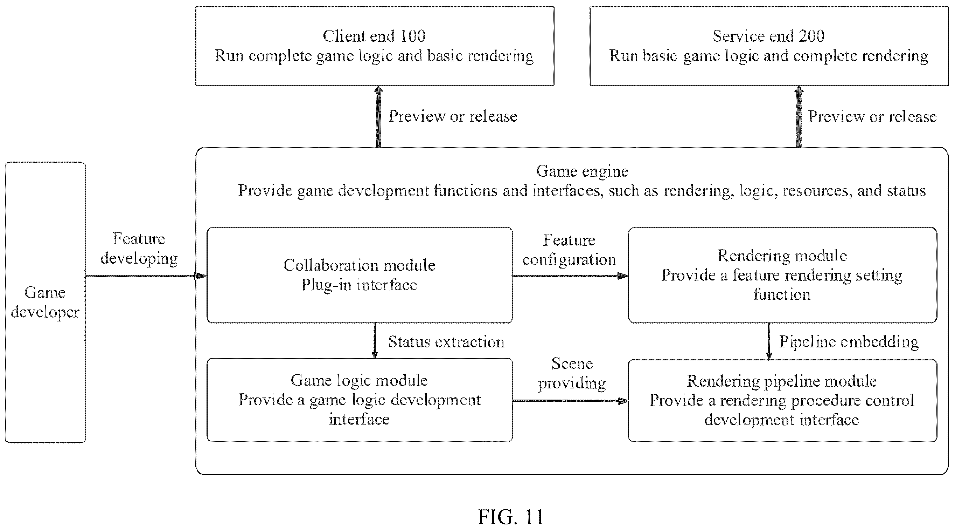

With reference to FIG. 11, the following describes a process of developing a game instance via the apparatus 300 shown in FIG. 1, to separately obtain the client end 100 and the service end 200. In this way, the client end 100 and the service end 200 may perform the processes in the foregoing method embodiments.

As shown in FIG. 11, a client end 100 developed by the apparatus 300 (for example, used as a plug-in) shown in FIG. 1 in this application may run complete game logic, and has a basic rendering capability of a feature. In addition, a service end 200 developed via the apparatus 300 shown in FIG. 1 in this application may run basic game logic, and has a complete rendering capability of a feature.

With reference to the system architecture shown in FIG. 1, the following describes an implementation process of a method in a development state in this application with reference to FIG. 11.

As shown in FIG. 11, an existing game engine may provide a game developer with a complete game development function, for example, a rendering pipeline and game logic. For example, FIG. 11 shows a game logic module and a rendering pipeline module.

FIG. 11 shows only an example of a collaboration module and a rendering module in the apparatus 300, to focus on a difference of collaboration modules between the client end 100 and the service end 200 and a difference of rendering modules between the client end 100 and the service end 200. It should be understood that, when the apparatus 300 used by the game developer performs function extension on the existing game engine, the apparatus 300 further includes the encoding module, the decoding module, and the transmission module shown in FIG. 1. FIG. 11 does not show an encoding module, a decoding module, and a transmission module that belong to the apparatus 300 and that are in the game engine after function extension.

The encoding module and the decoding module in the apparatus 300 may provide specific software and hardware encoding and decoding algorithm functions for data sources with different features, to reduce a size of an intermediate result delivered by a cloud side, and reduce impact of network bandwidth on use experience.

In addition, the transmission module in the apparatus 300 may establish a stable and low-delay network transmission channel, perform multi-stream adaptive control based on provided compressed data and types, and transmit a compression result on a cloud to a terminal side, for example, the client end 100, in a bitstream manner, and uploads a frame status of the client end to the service end.

The game developer may perform function configuration on the existing game engine through a plug-in interface (for example, a rendering setting interface) provided by the collaboration module in the apparatus 300 in this application. For example, the developer invokes the plug-in interface provided by the collaboration module to interact with modules in the apparatus 300 and modules in the existing game engine, to configure modules such as the rendering module, the game logic module, and the rendering pipeline module.

The plug-in interface provided by the collaboration module may include but is not limited to: an encoding interface configured to invoke the encoding module, a decoding interface configured to invoke the decoding module, a network transmission interface configured to invoke the transmission module, and the rendering setting interface.

In a runtime state, the encoding module at a functional layer may be invoked through the encoding interface provided by the collaboration module, to encode an intermediate rendering result of a feature.

In the runtime state, the decoding module at the functional layer may be invoked through the decoding interface provided by the collaboration module, to decode a bitstream of the feature.

In the runtime state, the transmission module at the functional layer may be invoked over the network transmission interface provided by the collaboration module, to perform network transmission of the encoded bitstream of the feature between the mobile terminal and the cloud.

In a development state, a series of feature plug-ins that can be used interactively may be provided for the game developer through the rendering setting interface provided by the collaboration module, to configure a feature function for the rendering module at the functional layer.

The functional layer may provide a rendering enhancement service in a manner compatible with the existing game engine through the plug-in interface provided by the collaboration module.

For example, the collaboration module may provide a feature setting interface for the game developer, and the game developer may perform an input on the feature setting interface, to invoke the rendering setting interface to configure a feature function of the rendering module. The rendering module may provide a feature rendering setting function.

A process of directly configuring the rendering module is complex. In this application, the game developer may configure the rendering module by invoking the rendering setting interface provided by the collaboration module, to perform a configuration operation such as enabling or disabling a feature, so that complexity of a process of configuring the rendering module is lower.

In addition, the rendering pipeline module may provide a rendering procedure control development interface, and the rendering module may embed a feature function of feature rendering into the rendering pipeline module in a customized or compatible manner.

In addition, the game logic module may provide a game logic development interface. In this case, the collaboration module may extract a required game status from the game logic module, and provide a game scene for the rendering pipeline module through the game logic module.

The following focuses on a difference between the two processes of developing the client end 100 and the service end 200 in the development process in FIG. 11.

When the game developer develops the client end 100, the game developer may set a feature status for the rendering module via the collaboration module. The feature status is a feature supported by the rendering module for rendering, for example, supports a plurality of features such as direct illumination and shadow.

When the game developer develops the client end 100, the game developer may customize execution logic for the collaboration module to generate control information (for example, the foregoing frame status).

In addition, the rendering pipeline module configured via the rendering module may have an independent rendering procedure of each feature supported by the rendering module. However, an intermediate rendering result of the feature used in each independent rendering procedure is a preset intermediate rendering result. In this way, a game pipeline on a terminal side includes only the basic game pipeline of a corresponding feature.

Therefore, when the client end 100 does not collaborate with the service end 200, visual effect of the foregoing features in each frame of image obtained through independent rendering is the same, and does not change in real time with the game scene. For example, effect of direct illumination on objects in each frame of image is the same. In this embodiment, the rendering pipeline module in the developed client end 100 ensures only most basic rendering effect of each feature, to reduce load on the terminal side as much as possible.

In addition, the rendering module in the client end 100 may have a feature injection function. Specifically, the rendering module in the client end 100 may replace a preset intermediate rendering result of a corresponding feature based on an intermediate rendering result that is of the corresponding feature and that is delivered by the service end 200, then, rendering computation is performed on the feature through the intermediate rendering result obtained after the replacement, to obtain the target rendering result of the feature. In this way, the client end 100 may collaborate with the service end 200, so that effect of a feature supported by the client end in each frame of game picture may be updated in real time with a change of a game scene, thereby enhancing display effect of the feature.

In addition, the collaboration module in the apparatus 300 may have a collaboration function of the collaboration module 103a and the collaboration module 103b shown in FIG. 3A and FIG. 3B. When the client end 100 is packaged and released, a function of the collaboration module 103a in the apparatus 300 and the configured rendering module 101a, decoding module 102a, transmission module 104a, rendering pipeline module 105a, and game logic module 106a may be packaged and released, to obtain the client end 100 shown in FIG. 3A and FIG. 3B.

When developing the service end 200, the game developer may set rendering and computing functions of a plurality of features for the rendering module via the collaboration module, to obtain a high-quality intermediate rendering result of a corresponding feature. In addition, the game developer may configure, for the rendering module via the collaboration module, a cache sharing function for the intermediate rendering result, and configure a splitting control function that the rendering module may extract an intermediate rendering result of a corresponding feature based on control information from the collaboration module.

In addition, the rendering pipeline module configured via the rendering module may have a complete rendering capability of each feature supported by the rendering module (for example, a high-quality intermediate rendering result of a corresponding feature may be obtained), thereby extracting a computing process of an intermediate rendering result of a complex rendering feature from a rendering procedure in a rendering pipeline on the terminal side, and enabling the transfer of computing power from the terminal side to the cloud side.

When the client end 100 is packaged and released, a function of the collaboration module 103b in the apparatus 300 and the configured rendering module 101b, decoding module 102b, transmission module 104b, rendering pipeline module 105b, and game logic module 106b may be packaged and released, to obtain the service end 200 shown in FIG. 3A and FIG. 3B.

In this application, terminal-cloud separation may be performed on a computing processing process based on a feature, high-load feature computing may be offloaded to the cloud, and an intermediate rendering result of the feature is obtained through computing. A terminal side may perform simple computing based on the intermediate rendering result delivered by the cloud, to implement effect rendering of a high-order feature on a game interface. In this way, drawing experience is improved. In addition, the client end may synchronize a feature rendering requirement to the service end, and the service end may install the feature rendering requirement to perform feature rendering, to obtain an intermediate rendering result of a feature that meets the feature rendering requirement of the client end, so that the client end can control a computing processing process of the feature of the service end in real time, for example, control of enabling or disabling rendering of the feature, and control of resolution and a compression rate of the intermediate rendering result of the feature. In addition, the client end may replace a rendering resource (for example, the preset intermediate rendering result) used in a feature rendering procedure for the client end with an intermediate rendering result of a feature delivered by the service end, to perform feature rendering. In this way, feature effect in the game picture displayed by the client end can be updated in real time as a game scene is updated.

In a possible implementation, an embodiment of this application provides an image rendering apparatus. The image rendering apparatus includes a receiving module, configured to receive first control information of a first image from a first client end; and a control module, configured to: separately control computing processing processes of m visual features based on the first control information, to obtain m first intermediate rendering results that are of the first image and that are related to the m visual features, where $m \geq 2$; and send the m first intermediate rendering results to the first client end. The m first intermediate rendering results are used to provide the first client end with a rendering resource for rendering the first image.

In a possible implementation, a quantity q of visual features supported by the image rendering apparatus for computing processing is greater than or equal to m, and the m visual features are visual features for which the first control information indicates to start rendering.

In a possible implementation, q computing processing modules that respectively perform computing processing on q visual features are configured for the image rendering apparatus, where q>_m. The control module is configured to invoke m computing processing modules that are in the q computing processing modules and that correspond to the m visual features to separately perform computing processing on the m visual features based on the first control information, to obtain the m first intermediate rendering results that are of the first image and that are related to the m visual features.

In a possible implementation, the receiving module is further configured to receive second control information of a second image from a second client end. The control module is further configured to separately control computing processing processes of n visual features based on the second control information, to obtain n second intermediate rendering results that are of the second image and that are related to the n visual features, where q>n>_1, and the n visual features are visual features for which the second control information indicates to start rendering. The sending module is further configured to send the n second intermediate rendering results to the second client end, where the n second intermediate rendering results are used to provide the second client end with a rendering resource for rendering the second image.

In a possible implementation, the control module is further configured to invoke n computing processing modules that are in the q computing processing modules and that correspond to the n visual features to separately perform computing processing on the n visual features based on the second control information, to obtain the n second intermediate rendering results that are of the second image and that are related to the n visual features.

In a possible implementation, the control module is further configured to: determine m original intermediate results obtained by separately computing the m visual features; and separately process the m original intermediate results based on the first control information, to obtain the m first intermediate rendering results that are of the first image and that are of the m visual features, where a data amount of the m first intermediate rendering results is less than a data amount of the m original intermediate results.

In a possible implementation, the first control information includes first indication information indicating extraction strategies of the respective intermediate rendering results of the m visual features. The control module is further configured to separately extract m groups of partial intermediate results from the m original intermediate results based on the first indication information, to obtain the m first intermediate rendering results of the m visual features.

In a possible implementation, the first control information includes third indication information indicating encoding strategies of the respective intermediate rendering results of the m visual features. The control module is further configured to: separately encode, based on the third indication information, the m original intermediate results or the m groups of partial intermediate results extracted from the m original intermediate results, to obtain the m first intermediate rendering results of the m visual features.

In a possible implementation, the control module is further configured to: determine n original intermediate results obtained by separately computing the n visual features; and separately process the n original intermediate results based on the second control information, to obtain the n second intermediate rendering results that are of the second image and that are of the n visual features, where a data amount of the n second intermediate rendering results is less than a data amount of the n original intermediate results.

In a possible implementation, the second control information includes second indication information indicating extraction strategies of the respective intermediate rendering results of the n visual features. The control module is further configured to separately extract n groups of partial intermediate results from the n original intermediate results based on the second indication information, to obtain the n second intermediate rendering results of the n visual features.

In a possible implementation, the second control information includes fourth indication information indicating encoding strategies of the respective intermediate rendering results of the n visual features. The control module is further configured to separately encode, based on the fourth indication information, the n original intermediate results or the n groups of partial intermediate results extracted from the n original intermediate results, to obtain the n second intermediate rendering results of the n visual features.

In a possible implementation, the control module is further configured to determine k visual features based on the first control information and the second control information, where the k visual features are a union set of the m visual features and the n visual features, m≤k, n≤k, and q>_k. The image rendering apparatus separately computes the k visual features to obtain k original intermediate results of the k visual features; and determines the m original intermediate results that are in the k original intermediate results and that respectively correspond to the m visual features.

In a possible implementation, the control module is further configured to determine the n original intermediate results that are in the k original intermediate results and that respectively correspond to the n visual features.

In a possible implementation, the control module is further configured to separately compute the m visual features for which the first control information indicates to start rendering, to obtain the m original intermediate results of the m visual features.

In a possible implementation, the control module is further configured to: determine p visual features that are different from the m visual features and that are in the n visual features for which the second control information indicates to start rendering, where 1≤p<n; separately compute the p visual features to obtain p original intermediate results of the p visual features; and determine, in the m original intermediate results, i original intermediate results respectively corresponding to i visual features, where the i visual features are same visual features between the m visual features and the n visual features, and i+p=n.

In a possible implementation, the first image and the second image are rendered images of a same scene at different fields of view.

In a possible implementation, the visual features include at least one of the following: direct illumination, reflected illumination, shadow, indirect illumination, spherical reflection, and ambient light shielding.

Effect of the image rendering method in the foregoing implementations is similar to effect of the image rendering method performed by the service end in the foregoing implementations. Details are not described herein.

In a possible implementation, this application provides an image rendering apparatus. The apparatus includes: a sending module, configured to send first control information of a first image to a service end, where the first control information is used to provide the service end with information for controlling respective computing processing processes of m visual features, and m≥2; a receiving module, configured to receive, from the service end, m first intermediate rendering results that are in response to the first control information; and a processing module, configured to obtain a first rendering result of the first image based on the m first intermediate rendering results of the m visual features.

In a possible implementation, the sending module is further configured to: when it is determined that a scene is updated and/or a camera posture is updated, send the first control information of the first image to the service end.

In a possible implementation, the sending module is further configured to: send control information indicating to start rendering for the m visual features; and/or send control information indicating extraction strategies of the respective intermediate rendering results of the m visual features; and; and send control information indicating encoding strategies of the respective intermediate rendering results of the m visual features.

In a possible implementation, the apparatus further includes: an obtaining module, configured to obtain target environment information, where the target environment information includes at least one of the following: network environment information of the client end, scene information of the first image, and user input information; and a determining module, configured to determine the first control information of the first image based on the target environment information.

In a possible implementation, the m visual features include at least one of the following: direct illumination, reflected illumination, shadow, indirect illumination, spherical reflection, and ambient light shielding.

Effect of the image rendering method in the foregoing implementations is similar to effect of the image rendering method performed by the client end in the foregoing implementations. Details are not described herein.

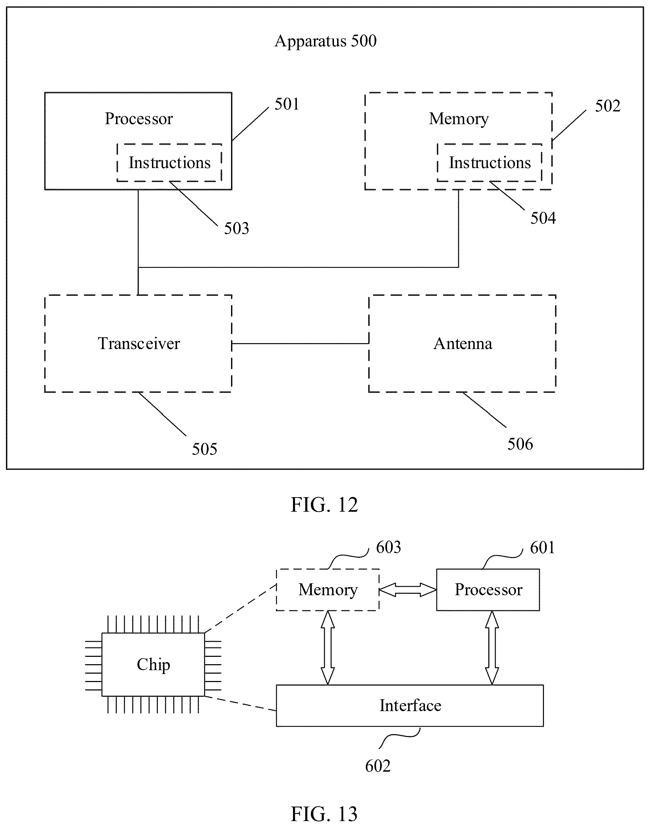

The following describes an apparatus provided in an embodiment of this application, Details are shown in FIG. 12.

FIG. 12 is a diagram of a structure of an image rendering apparatus according to an embodiment of this application. As shown in FIG. 12, the apparatus 500 may include a processor 501 and a transceiver 505, and optionally, may further include a memory 502.

The transceiver 505 may be referred to as a transceiver unit, a transceiver machine, a transceiver circuit, or the like, and is configured to implement a transceiver function. The transceiver 505 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 502 may store a computer program, software code, or instructions 504, where the computer program, the software code, or the instructions 504 may also be referred to as firmware. The processor 501 may implement the image rendering method provided in embodiments of this application by running a computer program, software code, or instructions 503 in the processor 501, or by invoking a computer program, software code, or the instructions 504 stored in the memory 502. The processor 501 may be a central processing unit (central processing unit, CPU), and the memory 502 may be, for example, a read-only memory (read-only memory, ROM) or a random access memory (random access memory, RAM).

The processor 501 and the transceiver 505 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The apparatus 500 may further include an antenna 506. The modules included in the apparatus 500 are merely examples for description. This is not limited in this application.

For example, the structure of the image rendering apparatus may not be limited by FIG. 12. The image rendering apparatus may be an independent device or may be a part of a large device. For example, an implementation form of the image rendering apparatus may be as follows:

(1) an independent integrated circuit IC, a chip, or a chip system or subsystem; (2) a set including one or more ICs, where optionally, the set of ICs may also include a storage component for storing data and instructions; (3) a module that can be embedded in another device; (4) a vehicle-mounted device or the like; or (5) others.

For a case in which the implementation form of the image rendering apparatus is a chip or chip system, refer to a diagram of a structure of a chip shown in FIG. 13. The chip shown in FIG. 13 includes a processor 601 and an interface 602. There may be one or more processors 601, and there may be a plurality of interfaces 602. Optionally, the chip or the chip system may include a memory 603.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing method embodiments.

Based on the same technical concept, an embodiment of this application further provides a computer program. When the computer program is executed, the foregoing method embodiments are implemented.

A part or all of the program may be stored in a storage medium encapsulated with a processor, or a part or all of the program may be stored in a storage that is not encapsulated with a processor.

Based on the same technical concept, an embodiment of this application further provides a chip, including a processor. The processor may implement the foregoing method embodiments.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in the ASIC.

A person of skill in the art should be aware that, in one or more of the foregoing examples, functions described in embodiments of this application may be implemented by using hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limited. Inspired by this application, a person of ordinary skill in the art may further make many modifications without departing from the purposes of this application and the protection scope of the claims, and all the modifications shall fall within the protection scope of this application.

**Claims**

1. A terminal-cloud collaboration system, wherein the terminal-cloud collaboration system comprises at least one client end and a service end that are communicatively connected, and the at least one client end comprises a first client end;

   the first client end is configured to send first control information of a first image to the service end;
   the service end is configured to: separately control computing processing processes of m visual features based on the first control information, to obtain m first intermediate rendering results that are of the first image and that are related to the m visual features, wherein $m \geq 2$; and send the m first intermediate rendering results to the first client end; and
the first client end is further configured to: receive the m first intermediate rendering results, and obtain a first rendering result of the first image based on the m first intermediate rendering results.

2. The system according to claim 1, wherein a quantity q of visual features supported by the service end for computing processing is greater than or equal to m, and the m visual features are visual features for which the first control information indicates to start rendering.

3. The system according to claim 1 or 2, wherein the service end is configured with q computing processing modules that respectively perform computing processing on q visual features, wherein $q \geq m$; and when the service end separately controls the computing processing processes of the m visual features based on the first control information, the service end is specifically configured to:
invoke m computing processing modules that are in the q computing processing modules and that correspond to the m visual features to separately perform computing processing on the m visual features based on the first control information, to obtain the m first intermediate rendering results that are of the first image and that are related to the m visual features.

4. The system according to claim 2 or 3, wherein the at least one client end further comprises a second client end;

   the second client end is configured to send second control information of a second image to the service end;
   the service end is further configured to: separately control computing processing processes of n visual features based on the second control information, to obtain n second intermediate rendering results that are of the second image and that are related to the n visual features, wherein $q > n > 1$, and the n visual features are visual features for which the second control information indicates to start rendering; and send the n second intermediate rendering results to the second client end; and
   the second client end is further configured to: receive the n second intermediate rendering results, and obtain a second rendering result of the second image based on the n second intermediate rendering results.

**5.** The system according to claim 4, wherein when the service end separately controls the computing processing processes of the n visual features based on the second control information, to obtain the n second intermediate rendering results that are of the second image and that are related to the n visual features, the service end is specifically configured to: invoke n computing processing modules that are in the q computing processing modules and that correspond to the n visual features to separately perform computing processing on the n visual features based on the second control information, to obtain the n second intermediate rendering results that are of the second image and that are related to the n visual features.

**6.** The system according to any one of claims 1 to 5, wherein when the service end separately controls computing processing processes of the m visual features based on the first control information, to obtain the m first intermediate rendering results that are of the first image and that are related to the m visual features, the service end is specifically configured to:

determine m original intermediate results obtained by separately computing the m visual features; and separately process the m original intermediate results based on the first control information, to obtain the m first intermediate rendering results that are of the first image and that are of the m visual features, wherein a data amount of the m first intermediate rendering results is less than a data amount of the m original intermediate results.

**7.** The system according to claim 6, wherein the first control information comprises first indication information indicating extraction strategies of the respective intermediate rendering results of the m visual features; and when the service end separately processes the m original intermediate results based on the first control information, to obtain the m first intermediate rendering results that are of the first image and that are of the m visual features, the service end is specifically configured to: separately extract m groups of partial intermediate results from the m original intermediate results based on the first indication information, to obtain the m first intermediate rendering results of the m visual features.

**8.** The system according to claim 6 or 7, wherein the first control information comprises third indication information indicating encoding strategies of the respective intermediate rendering results of the m visual features; and when the service end separately processes the m original intermediate results based on the first control information, to obtain the m first intermediate rendering results that are of the first image and that are of the m visual features, the service end is specifically configured to: separately encode, based on the third indication information, the m original intermediate results or the m groups of partial intermediate results extracted from the m original intermediate results, to obtain the m first intermediate rendering results of the m visual features.

**9.** The system according to any one of claims 4 to 8, wherein when the service end separately controls the computing processing processes of the n visual features based on the second control information, to obtain the n second intermediate rendering results that are of the second image and that are related to the n visual features, the service end is specifically configured to:

determine n original intermediate results obtained by separately computing the n visual features; and separately process the n original intermediate results based on the second control information, to obtain the n second intermediate rendering results that are of the second image and that are of the n visual features, wherein a data amount of the n second intermediate rendering results is less than a data amount of the n original intermediate results.

**10.** The system according to claim 9, wherein the second control information comprises second indication information indicating extraction strategies of the respective intermediate rendering results of the n visual features; and when the service end separately processes the n original intermediate results based on the second control information, to obtain the n second intermediate rendering results that are of the second image and that are of the n visual features, the service end is specifically configured to: separately extract n groups of partial intermediate results from the n original intermediate results based on the second indication information, to obtain the n second intermediate rendering results of the n visual features.

**11.** The system according to claim 9 or 10, wherein the second control information comprises fourth indication information indicating encoding strategies of the respective intermediate rendering results of the n visual features; and when the service end separately processes the n original intermediate results based on the second control information, to obtain the n second intermediate rendering results that are of the second image and that are of the n visual features, the service end is specifically configured to:
separately encode, based on the fourth indication information, the n original intermediate results or the n groups of partial intermediate results extracted from the n original intermediate results, to obtain the n second intermediate rendering results of the n visual features.

12. The system according to any one of claims 9 to 11, wherein when the service end determines the m original intermediate results obtained by separately computing the m visual features, and determines the n original intermediate results obtained by separately computing the n visual features, the service end is specifically configured to:

    determine k visual features based on the first control information and the second control information, wherein the k visual features are a union set of the m visual features and the n visual features, wherein m≤k, n≤k, and q≥k;
    separately compute the k visual features to obtain k original intermediate results of the k visual features;
    determine the m original intermediate results that are in the k original intermediate results and that respectively correspond to the m visual features; and
    determine the n original intermediate results that are in the k original intermediate results and that respectively correspond to the n visual features.

13. The system according to any one of claims 9 to 11, wherein when the service end determines the m original intermediate results obtained by separately computing the m visual features, the service end is specifically configured to:
    separately compute the m visual features for which the first control information indicates to start rendering, to obtain the m original intermediate results of the m visual features.

14. The system according to claim 13, wherein when the service end determines the n original intermediate results obtained by separately computing the n visual features, the service end is specifically configured to:

    determine p visual features that are different from the m visual features and that are in the n visual features for which the second control information indicates to start rendering, wherein 1≤p<n;
    separately compute the p visual features to obtain p original intermediate results of the p visual features; and
    determine, in the m original intermediate results, i original intermediate results respectively corresponding to i visual features, wherein
the i visual features are same visual features between the m visual features and the n visual features, and i+p=n.

15. The system according to any one of claims 4 to 14, wherein the first image and the second image are rendered images of a same scene at different fields of view.

16. The system according to any one of claims 1 to 15, wherein the visual feature comprises at least one of the following:
direct illumination, reflected illumination, shadow, indirect illumination, spherical reflection, and ambient light shielding.

17. An image rendering method, wherein the method comprises:

    receiving, by a service end, first control information of a first image from a first client end; and
    separately controlling, by the service end, computing processing processes of m visual features based on the first control information, to obtain m first intermediate rendering results that are of the first image and that are related to the m visual features, wherein m≥2; and sending the m first intermediate rendering results to the first client end, wherein
    the m first intermediate rendering results are used to provide the first client end with a rendering resource for rendering the first image.

18. The method according to claim 17, wherein a quantity q of visual features supported by the service end for computing processing is greater than or equal to m, and the m visual features are visual features for which the first control information indicates to start rendering.

19. The method according to claim 17 or 18, wherein the service end is configured with q computing processing modules that respectively perform computing processing on q visual features, wherein q≥m; and separately controlling, by the service end, the computing processing processes of the m visual features based on the first control information comprises:
invoking, by the service end, m computing processing modules that are in the q computing processing modules and that correspond to the m visual features to separately perform computing processing on the m visual features based on the first control information, to obtain the m first intermediate rendering results that are of the first image and that are related to the m visual features.

20. The method according to claim 18 or 19, wherein the method further comprises:

receiving, by the service end, second control information of a second image from a second client end; and

separately controlling, by the service end, computing processing processes of n visual features based on the second control information, to obtain n second intermediate rendering results that are of the second image and that are related to the n visual features, wherein q2:n2: 1, and the n visual features are visual features for which the second control information indicates to start rendering; and sending the n second intermediate rendering results to the second client end, wherein

the n second intermediate rendering results are used to provide the second client end with a rendering resource for rendering the second image.

21. An image rendering method, wherein the method comprises:

sending, by a client end, first control information of a first image to a service end, wherein the first control information is used to provide the service end with information for controlling respective computing processing processes of m visual features, and m≥2;

receiving, by the client end from the service end, m first intermediate rendering results that are in response to the first control information; and

obtaining, by the client end, a first rendering result of the first image based on the m first intermediate rendering results of the m visual features.

22. The method according to claim 21, wherein sending, by the client end, the first control information of the first image to the service end comprises:

sending, by the client end, the first control information of the first image to the service end when the client end determines that a scene is updated and/or a camera posture is updated.

23. The method according to claim 21 or 22, wherein sending, by the client end, the first control information of the first image to the service end comprises:

sending, by the client end to the service end, control information indicating to start rendering for the m visual features; and/or

sending, by the client end to the service end, control information indicating extraction strategies of the respective intermediate rendering results of the m visual features; and/or

sending, by the client end to the service end, control information indicating encoding strategies of the respective intermediate rendering results of the m visual features.

24. An image rendering method, wherein the method comprises:

receiving, by a control module, first control information of a first image from a first client end;

outputting, by the control module, first information based on the first control information, wherein the first information indicates a rendering module to start rendering for m visual features;

receiving, by the control module, m original intermediate results from the rendering module, wherein the m original intermediate results are respective feature computation results obtained by the rendering module by separately computing the m visual features; and

separately processing, by the control module, the m original intermediate results based on the first control information, to obtain the m first intermediate rendering results that are of the first image and that are of the m visual features, wherein a data amount of the m first intermediate rendering results is less than a data amount of the m original intermediate results, and m≥2, wherein

the m first intermediate rendering results are used to provide the first client end with a rendering resource for rendering the first image.

25. The method according to claim 24, wherein a quantity q of visual features supported by the control module for computing processing is greater than or equal to m, and the m visual features are visual features for which the first control information indicates to start rendering.

26. The method according to claim 24 or 25, wherein the control module is configured with q sub-control modules that respectively process q visual features, wherein q≥m; and

separately processing, by the control module, the m original intermediate results based on the first control information, to obtain the m first intermediate rendering results that are of the first image and that are of the m visual features comprises:

separately processing, by m sub-control modules that are in the q sub-control modules and that correspond to the m visual features, the m original intermediate results based on the first control information, to obtain the m first intermediate rendering results that are of the first image and that are of the m visual features.

27. An image rendering method, wherein the method comprises:

receiving, by a rendering module, first information from a control module, wherein the first information indicates the rendering module to start rendering for m visual features;

separately computing, by the rendering module, the m visual features based on the first information to obtain m original intermediate results, wherein m≥2; and

sending, by the rendering module, the m original intermediate results to the control module.

28. The method according to claim 27, wherein a quantity q of visual features supported by the rendering module for rendering is greater than or equal to m.

29. The method according to claim 27 or 28, wherein the rendering module is configured with q sub-rendering modules that respectively perform computing processing on q visual features, wherein q≥m; and separately computing, by the rendering module, the m visual features based on the first information to obtain the m original intermediate results comprises: separately computing, by m sub-rendering modules that are in the q sub-rendering modules and that correspond to the m visual features, the m visual features, to obtain the m original intermediate results that are of the first image and that are related to the m visual features.

30. An image rendering apparatus, wherein the image rendering apparatus comprises:

a receiving module, configured to receive first control information of a first image; and

a control module, configured to: separately control computing processing processes of m visual features based on the first control information, to obtain m first intermediate rendering results that are of the first image and that are related to the m visual features, wherein m≥2; and send the m first intermediate rendering results to the first client end, wherein

the m first intermediate rendering results are used to provide the first client end with a rendering resource for rendering the first image.

31. An image rendering apparatus, wherein the image rendering apparatus comprises:

a sending module, configured to send first control information of a first image to a service end, wherein the first control information is used to provide the service end with information for controlling respective computing processing processes of m visual features, and m≥2;

a receiving module, configured to receive, from the service end, m first intermediate rendering results that are in response to the first control information; and

a processing module, configured to obtain a first rendering result of the first image based on the m first intermediate rendering results of the m visual features.

32. A computer-readable storage medium, comprising a computer program, wherein when the computer program is run on a computer or a processor, the computer or the processor is enabled to perform the method according to any one of claims 17 to 20 or the method according to any one of claims 21 to 23, or the method according to any one of claims 24 to 26, or the method according to any one of claims 27 to 29.

33. An image rendering apparatus, comprising one or more interface circuits and one or more processors, wherein the interface circuit is configured to: receive a signal from a memory, and send the signal to the processor, and the signal comprises computer instructions stored in the memory; and when the processor executes the computer instructions, the processor is configured to perform the method according to any one of claims 17 to 20, or the method according to any one of claims 21 to 23, or the method according to any one of claims 24 to 26, or the method according to any one of claims 27 to 29.

34. A computer program product, wherein the computer program product comprises a software program, and when the software program is executed by a computer or a processor, steps of the method according to any one of claims 17 to 20 are performed, or steps of the method according to any one of claims 21 to 23 are performed, or the method according to any one of 24 to 26 is performed, or the method according to any one of 27 to 29 is performed.

35. An image rendering apparatus, wherein the image rendering apparatus comprises a processor, the processor is configured to execute instructions, and when the instructions are executed by the processor, the processor is configured to perform the method according to any one of claims 17 to 20, or the method according to any one of claims 21 to 23, or the method according to any one of claims 24 to 26, or the method according to any one of claims 27 to 29.

36. A chip, wherein the chip comprises a processor and a communication interface, the processor is configured to invoke and run instructions from the communication interface, and when the processor executes the instructions, the method according to any one of claims 17 to 20 is implemented.

**37.** A chip, wherein the chip comprises a processor and a communication interface, the processor is configured to invoke and run instructions from the communication interface, and when the processor executes the instructions, the method according to any one of claims 21 to 23 is implemented.

**38.** A chip, wherein the chip comprises a processor and a communication interface, the processor is configured to invoke and run instructions from the communication interface, and when the processor executes the instructions, the method according to any one of claims 24 to 26 is implemented.

**39.** A chip, wherein the chip comprises a processor and a communication interface, the processor is configured to invoke and run instructions from the communication interface, and when the processor executes the instructions, the method according to any one of claims 27 to 29 is implemented.

Apparatus 300

Functional layer: Rendering module | Encoding module | Decoding module | Transmission module

Interface layer: Collaboration module

Engine layer: API | GUI | Rendering pipeline module | Game logic module | Camera module | ...

FIG. 1

Client end 100

Service end 200

S101: Detect that a game scene changes

S102: Determine control information of a plurality of features

S103: Send the control information

S104: Separately control computing processing processes of the plurality of features based on the control information, to obtain an intermediate rendering result of each feature of a current frame

S105: Send a corresponding intermediate rendering result based on the control information

S106: Render a corresponding feature on the game scene based on the intermediate rendering result, to obtain a target rendering result of the feature on the game scene

FIG. 2

**Client end 100**
Run complete game logic and basic rendering

Rendering module 101a
Feature injection

Decoding module 102a
Data decoding

Feature stream

Perform feature injection

Bitstream of a feature
Network status information

Collaboration module 103a
Terminal-cloud synchronization and collaborative scheduling

Frame status

Transmission module 104a
Data transmission, multi-stream control, and network status

Changed game scene

Game status

User

Game picture

Rendering pipeline module 105a
Provide a basic rendering capability

Camera posture

Game logic module 106a
Provide complete game logic

Operation

TO
FIG. 3B

FIG. 3A

Service end 200
Run basic game logic and complete rendering

Encoding module 102b
Data encoding

Rendering module 101b
Feature rendering, cache sharing,
and traffic distribution

Feature
stream

Bitstream of
a feature

changed
game scene

Feature state
Status of a
feature resource
Camera posture

Perform
feature
rendering
and
caching

Transmission module 104b
Data transmission, multi-stream
control, and network status

Frame status

Collaboration module 103b
Terminal-cloud synchronization and
collaborative scheduling

Synchronize game scenes

Changed
game
scene

Game logic module 106b
Provide basic game logic

Rendering pipeline module 105b
Provide a complete rendering capability

FIG. 3B

EP 4 697 278 A1

Frame status

Frame status packaging

Feature status
Status of a
feature
resource

Coordination
module 103a

Control strategy

Frame
information

Network status
information

Terminal
information

Scene information
of a game scene

Game status (character animation, scene change, and camera posture)

FIG. 4a

FIG. 4b

Service end 200

203

202

201

Game status
updating

Changed
game
scene

Feature components of
three features

Bitstream
of a feature

Game
status

Feature
status

Intermediate
rendering
result

Feature
stream

Bitstream
of a feature

Status
summarizing

Feature
rendering

Cache
extraction

Feature
stream
encoding

Downstream
flow control

Feature component

Bitstreams
of three
features of
the client
end 100

Bitstreams
of two
features of
the client
end 101

Frame
statuses of
different
client ends

Status of a feature
resource of each
client end
Camera posture of
each client end

Data related to the
client end 100

Data related to the
client end 101

Network transmission

TO
FIG. 5B

FIG. 5A

TO
FIG. 5B

CONT. FROM FIG. 5A

Bitstreams of two features of the client end 101

Frame status

Client end 101

Bitstreams of three features of the client end 100

Bitstream receiving

303 302 301

Bitstream of a feature

Feature components of three features

Feature stream decoding

Feature stream

Conversion processing

Intermediate rendering result obtained through conversion

Feature injection

Feature component

Intermediate rendering results of three features obtained through conversion

Rendering pipeline module 105a

Game picture

Displayed on a screen

Client end 100

CONT. FROM FIG. 5A

Frame status

Feature status

Status sending and uploading

Status of a feature resource

Game status, for example, character animation

Game status extraction

Game scene

Camera posture

Game logic execution

Data related to the client end 100

Data related to the client end 101

FIG. 5B

46

Client end 100:

| Game scene | → | Rendering direct illumination | Image 11 → | Rendering reflected illumination | Image 21 → | Rendering shadow | Image 31 → | Postprocessing | → | Image 41 that can be displayed on a screen |

Preset irradiance map → Compute illumination

FIG. 6a

Client
nd 100:

| Game scene | → | Rendering direct illumination | Image 12 → | Rendering reflected illumination | Image 22 → | Rendering shadow | Image 32 → | Postprocessing | → | Image 42 that can be displayed on a screen |

Preset irradiance map → Compute illumination

Replace

Service
nd 200:

Game scene → Target irradiance map

FIG. 6b

EP 4 697 278 A1

Service end 200

Shadow ray tracing computing → Shadow coefficient cache → Shadow region extraction → Shadow coefficient compression

Reflected ray tracing computing → Reflection texture cache → Reflection region extraction → Adaptive encoding

DI ray tracing computing → Probe cache → DI probe extraction → Efficient probe encoding

Physics/ Animation computing

Game scene updating

Status synchronization

Network transmission

TO FIG. 7B
TO FIG. 7B
TO FIG. 7B
TO FIG. 7B
TO FIG. 7B
TO FIG. 7B

FIG. 7A

49

CONT. FROM FIG. 7A | CONT. FROM FIG. 7A | CONT. FROM FIG. 7A | CONT. FROM FIG. 7A | CONT. FROM FIG. 7A | CONT. FROM FIG. 7A

**Client end 100**

- Frame status synchronization
- Game scene updating
- User operation instruction → Game logic execution
- Physics/Animation computing
- Feature rendering
- Probe decoding → DI generation → DI replacement
- Reflection map decoding → Reflection generation → Reflection replacement
- Shadow coefficient decoding → Shadow generation → Shadow replacement
- Particle special effect → Postprocessing → Displayed on a screen

**Client end 101**

EP 4 697 278 A1

FIG. 7B

Rendering module: direct illumination feature

| Traverse light probes | → | Traverse direct light sources | → | Direct illumination | → | Integral filtering | → | Probe irradiance database | → | DI extraction |

Encoding module

Layer encoding → Bitstream of DI of the client end 100

Game scene

Camera posture of a client end 100

Status of a feature resource of the client end 100 (for example, a compression rate)

FIG. 8a

Rendering module: reflected illumination feature

Encoding module

TSS texture space shading

TSS texture map database

Raster sampling

Reflection texture map

Field of view removal

Mirror camera

Layer encoding

Bitstream of reflected illumination of the client end 100

Game scene

Camera posture of a client end 100

Status of a feature resource of the client end 100 (for example, a compression rate)

FIG. 8b

EP 4 697 278 A1

52

Rendering module: shadow feature

Encoding module

```
Traverse      →   Shadow        →   TSS texture   →   Raster      →   Shadow    →   Shadow
surface light     coefficient       map database      sampling       texture       merging
sources           computation
```

Layer encoding   →   Bitstream of shadow of the client end 100

Game scene

Camera posture of a client end 100

Status of a feature resource of the client end 100 (for example, a compression rate)

FIG. 8c

FIG. 8d

EP 4 697 278 A1

Rendering module: spherical reflection feature

Encoding module

| Traverse spherical reflection probes | → | Spherical reflection texture computation | → | Spherical reflection texture database | → | Probe extraction | → | Layer encoding | → Spherically reflected bitstream of the client end 100 |

Game scene

Camera posture of a client end 100

Status of a feature resource of the client end 100 (for example, a compression rate)

FIG. 8e

Irradiance map

↓

Converted to a
spherical harmonic
Gaussian coefficient

↓ Replace the spherical
harmonic Gaussian coefficient

Rendering
procedure of direct
illumination
provided by a client
end 100

FIG. 9a

Reflection texture
map

↓ Replace the reflection map

Rendering
procedure of a
planar reflection
probe provided by a
client end 100

FIG. 9b

Soft shadow
coefficient map

↓ Sample the coefficient map

A client end 100
customizes a soft
shadow shader

FIG. 9c

FIG. 10

EP 4 697 278 A1

EP 4 697 278 A1

| Client end 100<br>Run complete game logic and basic rendering | Service end 200<br>Run basic game logic and complete rendering |

Preview or release    Preview or release

**Game engine**
Provide game development functions and interfaces, such as rendering, logic, resources, and status

Game developer

Feature developing

| Collaboration module<br>Plug-in interface | Feature configuration | Rendering module<br>Provide a feature rendering setting function |

Status extraction    Pipeline embedding

| Game logic module<br>Provide a game logic development interface | Scene providing | Rendering pipeline module<br>Provide a rendering procedure control development interface |

FIG. 11

Apparatus 500

Processor — 501

Instructions

503

Memory — 502

Instructions

504

Transceiver

505

Antenna

506

FIG. 12

603

Memory

601

Processor

Chip

Interface

602

FIG. 13

# INTERNATIONAL SEARCH REPORT

| International application No. |
|---|
| **PCT/CN2024/077746** |

## A. CLASSIFICATION OF SUBJECT MATTER

G06T 15/02(2011.01)i;  G06T 15/06(2011.01)i

According to International Patent Classification (IPC) or to both national classification and IPC

## B. FIELDS SEARCHED

Minimum documentation searched (classification system followed by classification symbols)

IPC:  G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 渲染, 阴影, 反射, 服务器, 协同, render, shadow, reflection, server, cooperation

## C. DOCUMENTS CONSIDERED TO BE RELEVANT

| Category* | Citation of document, with indication, where appropriate, of the relevant passages | Relevant to claim No. |
|---|---|---|
| X | CN 115496845 A (BEIJING DAJIA INTERNET INFORMATION TECHNOLOGY CO., LTD.) 20 December 2022 (2022-12-20) description, paragraphs [0004]-[0225] | 1-39 |
| A | CN 116310026 A (SHANGHAI BIREN INTELLIGENT TECHNOLOGY CO., LTD.) 23 June 2023 (2023-06-23) entire document | 1-39 |
| A | CN 116091672 A (HANGZHOU QUNHE INFORMATION TECHNOLOGIES CO., LTD.) 09 May 2023 (2023-05-09) entire document | 1-39 |

☐ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/077746** |

| Patent document cited in search report | | | Publication date (day/month/year) | Patent family member(s) | Publication date (day/month/year) |
| --- | --- | --- | --- | --- | --- |
| CN | 115496845 | A | 20 December 2022 | None | |
| CN | 116310026 | A | 23 June 2023 | None | |
| CN | 116091672 | A | 09 May 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310942831 X